(19) Europäisches Patentamt
European Patent Office
Office européen des brevets

(11) **EP 2 966 148 A1**

(12) **EUROPEAN PATENT APPLICATION**
published in accordance with Art. 153(4) EPC

(43) Date of publication:
**13.01.2016 Bulletin 2016/02**

(51) Int Cl.:
**C09K 11/64** (2006.01)     **C04B 35/584** (2006.01)
**C04B 35/626** (2006.01)     **C09K 11/08** (2006.01)

(21) Application number: **14760930.9**

(22) Date of filing: **07.03.2014**

(86) International application number:
**PCT/JP2014/056043**

(87) International publication number:
**WO 2014/136961 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.03.2013   JP 2013046105**

(71) Applicant: **UBE Industries, Ltd.**
**Yamaguchi 755-8633 (JP)**

(72) Inventors:
• **IWASHITA, Kazuki**
**Ube-shi**
**Yamaguchi 755-8633 (JP)**

• **SUMINO, Mao**
**Ube-shi**
**Yamaguchi 755-8633 (JP)**
• **UEDA, Takayuki**
**Ube-shi**
**Yamaguchi 755-8633 (JP)**
• **FUJINAGA, Masataka**
**Ube-shi**
**Yamaguchi 755-8633 (JP)**
• **JIDA, Shinsuke**
**Ube-shi**
**Yamaguchi 755-8633 (JP)**

(74) Representative: **Tischner, Oliver**
**Lavoix Munich**
**Bayerstrasse 83**
**80335 München (DE)**

(54) **METHOD FOR PRODUCING NITRIDE PHOSPHOR, SILICON NITRIDE POWDER FOR NITRIDE PHOSPHOR, AND NITRIDE PHOSPHOR**

(57)     Provided is a nitride phosphor comprising a (Ca, Sr)AlSiN$_3$:Eu phosphor, of which the chemical composition can be controlled easily and which has excellent fluorescent properties. Provided is a method for producing a nitride phosphor represented by the formula: $(Ca_{1-x1-x2}Sr_{x1}Eu_{x2})_aAl_bSi_cN_{2a/3+b+4/3c}$ (wherein $0.49<x1<1.0$, $0.0<x2<0.02$, $0.9\leq a\leq1.1$, $0.9\leq b\leq1.1$, $0.9\leq c\leq 1.1$). In the method, a silicon nitride powder is used as a raw material, wherein the silicon nitride powder has a specific surface area of 5 to 35 m$^2$/g and also has such a property that the FS/FSO ((m$^2$/g)/(mass%)) ratio is 8 to 53 and the FS/FIO ((m$^2$/g)/(mass%)) ratio is 20 or more in which FSO (mass%) represents the ratio of the amount of oxygen existing in a region between the surface of each particle of the silicon nitride powder and a zone that is 3 nm directly below the surface of the particle to the amount of the silicon nitride powder by mass, FIO (mass%) represents the ratio of the amount of oxygen existing on the inner side of the zone that is 3 nm directly below the surface of the particle to the amount of the silicon nitride powder by mass, and FS (m$^2$/g) represents a specific surface area.

EP 2 966 148 A1

**Description**

TECHNICAL FIELD

The present invention relates to a nitride phosphor composed of a $(Ca,Sr)AlSiN_3:Eu$ phosphor that can be fired at a relatively low temperature and allows for easy control of the composition, a production method thereof, and a nitride phosphor powder for the nitride phosphor.

BACKGROUND ART

An electric discharge fluorescent lamp, an incandescent bulb, etc., used as a lighting device at present have various problems, for example, that a harmful substance such as mercury is contained or the life-span is short. However, an LED that emits blue light or ultraviolet light has been developed one after another in recent years, and studies and developments are being aggressively made to combine ultraviolet-to-blue light generated from the LED with a phosphor having an excitation band in the wavelength region of ultraviolet-to-blue color, thereby emitting white light, and utilize the white light as next-generation illumination. This white light LED illumination is an ideal lighting device due advantages such as less heat is generated, the configuration consisting of a semiconductor element and a phosphor results in a long life-span without, unlike the conventional incandescent bulb, causing burnout, and a harmful substance, such as mercury, is not required.

In order to obtain white light by combining the above-described LED with a phosphor, two methods are generally considered. One is a method of combining a blue light-emitting LED with a phosphor that is excited by receiving the blue light emission and emits yellow light, and obtaining white light emission by the combination of the blue light emission and the yellow light emission. In this case, a $Y_3Al_5O_{12}:Ce$ phosphor (YAG:Ce phosphor) is widely used as the yellow phosphor.

The other one is a method of combining a near ultraviolet/ultraviolet light-emitting LED with a red (R) light-emitting phosphor, a green (G) light-emitting phosphor and a blue (B) light-emitting phosphor, each emitting such color light when excited by receiving the near ultraviolet/ultraviolet light emission, and obtaining white light emission by the RGB light. In this method of obtaining white light emission by RGB light, optional emission color other than white light can be obtained by the combination or mixing ratio of RGB phosphors, and the application range as the lighting device is wide. As for the phosphor used for this purpose, the red phosphor includes, for example, $Y_2O_2S:Eu$, $La_2O_2S:Eu$, $3.5MgO·0.5MgF_2·GeO_2:Mn$, and $(La,Mn,Sm)_2O_2S·Ga_2O_3:Eu$; the green phosphor includes, for example, $ZnS:Cu·Al$, $SrAl_2O_4:Eu$, and BAM:Eu·Mn; and the blue phosphor includes, for example, BAM:Eu, $Sr_5(PO_4)_3Cl:Eu$, ZnS:Ag, and $(Sr,Ca,Ba,Mg)_{10}(PO_4)_6Cl:Eu$. By combining these RGB phosphors with a light-emitting part such as near ultraviolet/ultraviolet light-emitting LED, a light source or a lighting device, including LED, which emits light with a white or desired color, can be obtained.

However, in the case of white LED illumination obtained by the combination of a blue LED and a yellow phosphor (YAG:Ce), since light emission on the long wavelength side in the visible light region is insufficient, white light slightly tinged with blue is emitted, and emission of white light slightly tinged with red, like an electric bulb, cannot be obtained. In addition, in the case of white LED illumination obtained by the combination of a near ultraviolet/ultraviolet LED and RGB phosphors, the red phosphor out of three color phosphors is low in the excitation efficiency on the long wavelength side, compared with other phosphors, and exhibits a low emission efficiency, , and therefore the mixing ratio of only the red phosphor must be increased, as a result, the phosphor for enhancing the luminance is lacked and thus white color with high luminance cannot be achieved. Furthermore, the emission spectrum of the phosphor is sharp, which raises a problem of poor color rendering property.

Recently, a nitrogen-containing phosphor having good excitation on the long wavelength side and capable of providing a light emission peak with a wide half-value width, such as silicon nitride-based phosphor (see, for example, Patent Documents 1 and 2), and a phosphor using SiAlON as the matrix material (see, for example, Patent Documents 3 and 4) have been reported. The phosphor containing nitrogen has a large ratio of covalent bond, compared with an oxide-based phosphor, , and therefore is characterized by having a good excitation band even in light having a wavelength of 400 nm or more, and thus, this phosphor is receiving attention as the phosphor for white LED.

RELATED ART

PATENT DOCUMENT

Patent Document 1: Kokai (Japanese Unexamined Patent Publication) No. 2003-321675

Patent Document 2: Kokai No. 2006-306982
Patent Document 3: Kokai No. 2005-307012
Patent Document 4: Kokai No. 2005-255885
Patent Document 5: Kokai No. 2005-336253
Patent Document 6: Kokai No. 2006-8721
Patent Document 7: Kokai No. 9-156912
Patent Document 8: Kokai No. 4-209706

SUMMARY OF THE INVENTION

PROBLEMS TO BE SOLVED BY THE INVENTION

In the silicon nitride-based phosphor described in Patent Document 1, the emission peak wavelength (fluorescence peak wavelength) is about 650 nm, and a phosphor having a fluorescence peak wavelength shorter than 650 nm is also required. As the phosphor having a fluorescence peak wavelength of approximately from 620 to 640 nm, nitride phosphors containing strontium as a constituent element, described in Patent Documents 2, 5 and 6, are known. Out of these nitride phosphors, a Eu-activated $(Ca,Sr)AlSiN_3$ phosphor has good temperature characteristic and durability, compared with other nitride phosphors containing strontium as a constituent element, and is a practically superior phosphor. However, for the following reason, the $(Ca,Sr)AlSiN_3$:Eu phosphor has a problem of low luminance, compared with a strontium-free nitride phosphor, etc.

In the production of the conventional $(Ca,Sr)AlSiN_3$:Eu phosphor, since strontium evaporates at the firing for synthesizing the phosphor, a $(Ca,Sr)AlSiN_3$:Eu phosphor, particularly, a $(Ca,Sr)AlSiN_3$:Eu phosphor that allows for easy obtaining of a phosphor having a fluorescence peak wavelength shorter than 650 nm and has a large strontium content ratio, is subject to a significant composition variation form the raw material. Accordingly, the $(Ca,Sr)AlSiN_3$:Eu phosphor is not easy to precisely control the composition and is likely to contain many heterophases other than the target $(Ca,Sr)AlSiN_3$:Eu phosphor. For this reason, it is usually difficult to obtain a $(Ca,Sr)AlSiN_3$:Eu phosphor excellent in the fluorescence properties.

An object of the present invention is to provide a production method of a nitride phosphor composed of a $(Ca,Sr)AlSiN_3$:Eu phosphor having a fluorescence peak wavelength of 630 to 646 nm and having high luminance (fluorescence intensity) and practical external quantum efficiency, a silicon nitride powder for the nitride phosphor, and a nitride phosphor produced using the silicon nitride powder.

MEANS TO SOLVE THE PROBLEMS

The present inventors have made many intensive studies to improve the fluorescence properties of a $(Ca,Sr)AlSiN_3$:Eu phosphor, as a result, it has been found that when a silicon nitride powder having a specific surface area, specific surface oxygen and specific internal oxygen is used as the silicon source, a $(Ca,Sr)AlSiN_3$:Eu phosphor can be synthesized at a lower temperature, making it easy to control the composition, and moreover, a nitride phosphor excellent in the fluorescence properties can be obtained. The present invention has been accomplished based on this finding.

That is, the present invention relates to a method for producing a nitride phosphor, comprising:

mixing a calcium source substance, a strontium source substance, a europium source substance, an aluminum source substance, and a silicon nitride powder in which the specific surface area is from 5 to 35 $m^2/g$ and assuming that the mass ratio of oxygen existing in a region from the particle surface to 3 nm beneath the particle surface relative to the silicon nitride powder is FSO (mass%), the mass ratio of oxygen existing in a more inward side than 3 nm beneath the particle surface relative to the silicon nitride powder is FIO (mass%), and the specific surface area is FS ($m^2/g$), FS/FSO (($m^2/g$)/(mass%)) is from 8 to 53 and FS/FIO (($m^2/g$)/(mass%)) is 20 or more, to satisfy the ratio of constituent elements except for nitrogen in a composition represented by composition formula (1):

$$(Ca_{1-x1-x2}Sr_{x1}Eu_{x2})_a Al_b Si_c N_{2a/3+b+4/3c} \qquad (1)$$

(wherein $0.49 < x1 < 1.0$, $0.0 < x2 < 0.02$, $0.9 \leq a \leq 1.1$, $0.9 \leq b \leq 1.1$, and $0.9 \leq c \leq 1.1$), and
firing the mixture.

In the present invention, x1 and x2 are preferably $0.69 < x1 < 1.00$ and $0.00 < x2 < 0.01$.
In the present invention, a, b and c are preferably a=1, b=1 and c=1. Furthermore, a, b and c are more preferably a=1.0, b=1.0 and c=1.0.

In the method for producing a nitride phosphor of the present invention, the nitride phosphor obtained preferably has a composition represented by composition formula (1'):

$$(Ca_{1-x1'-x2'}Sr_{x1'}Eu_{x2'})_{a'}Al_{b'}Si_{c'}N_{2a'/3+b'+4/3c'} \qquad (1')$$

(wherein $0.49 < x1' < 1.0$, $0.0 < x2' < 0.02$, $0.9 \leq a' \leq 1.1$, $0.9 \leq b' \leq 1.1$, and $0.9 \leq c' \leq 1.1$).

$x1'$ and $x2'$ are preferably $0.69 < x1' < 1.00$ and $0.00 < x2' < 0.01$. In addition, $a'$, $b'$ and $c'$ are preferably $a'=1$, $b'=1$ and $c'=1$. Furthermore, $a'$, $b'$ and $c'$ are more preferably $a'=1.0$, $b'=1.0$ and $c'=1.0$.

According to the method for producing a nitride phosphor of the present invention, the ratio $x1'/x1$ may be preferably 0.9 or more, more preferably 0.94 or more.

The present invention also relates to a silicon nitride powder for a nitride phosphor, wherein the specific surface area is from 5 to 35 $m^2/g$ and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS ($m^2/g$), FS/FSO (($m^2/g$)/(mass%)) is from 8 to 53 and FS/FIO is 20 or more.

In addition, the present invention relates to a nitride phosphor obtained by mixing a calcium source substance, a strontium source substance, a europium source substance, an aluminum source substance, and a silicon nitride powder in which the specific surface area is from 5 to 35 $m^2/g$ and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS ($m^2/g$), FS/FSO (($m^2/g$)/(mass%)) is from 8 to 53 and FS/FIO (($m^2/g$)/(mass%)) is 20 or more, to satisfy the ratio of constituent elements except for nitrogen in a composition represented by composition formula (1):

$$(Ca_{1-x1-x2}Sr_{x1}Eu_{x2})_aAl_bSi_cN_{2a/3+b+4/3c} \qquad (1)$$

(wherein $0.49 < x1 < 1.0$, $0.0 < x2 < 0.02$, $0.9 \leq a \leq 1.1$, $0.9 \leq b \leq 1.1$, and $0.9 \leq c \leq 1.1$), and
firing the mixture, wherein
the nitride phosphor emits fluorescence having a peak wavelength of 630 to 646 nm when excited by light at a wavelength of 450 nm and on this occasion, exhibits an external quantum efficiency of 40% or more.

In the nitride phosphor of the present invention, it is preferred that $x1$, $x2$, $a$, $b$ and $c$ are $0.69 < x1 < 1.00$, $0.00 < x2 < 0.01$, $a=1$, $b=1$ and $c=1$, the nitride phosphor emits fluorescence having a peak wavelength of 630 to 640 nm when excited by light at a wavelength of 450 nm and on this occasion, exhibits an external quantum efficiency of 45% or more.

EFFECTS OF THE INVENTION

According to the present invention, a silicon nitride powder having high reactivity and little internal oxygen is used as a raw material, and therefore the target nitride phosphor can be synthesized at a low temperature, so that evaporation of strontium at the firing for synthesizing the phosphor can be suppressed and the composition control of the nitride phosphor can be facilitated. Moreover, the amount of oxygen contained in the nitride phosphor, which is derived from the raw material, can be reduced , and therefore a nitride phosphor composed of a $(Ca,Sr)AlSiN_3$:Eu phosphor excellent in the fluorescence properties is provided.

MODE FOR CARRYING OUT THE INVENTION

The embodiments of the method for producing a nitride phosphor according to the present invention, the silicon nitride powder used as the silicon source in the production method, and the nitride phosphor obtained by the production method are described in detail below.

Incidentally, in the description and claims of the present invention, the numerical value and numerical range in the composition formula or chemical formula should be understood to represent the numerical range specified by significant figures of the numerical value. For example, $0.49 < x1 < 1.0$, $0.9 \leq a \leq 1.1$ and $a=1$ should be understood to be $0.485 < x1 < 1.05$, $0.85 \leq a \leq 1.14$ and $0.95 \leq a \leq 1.04$, respectively.

The nitride phosphor of the present invention is a nitride phosphor obtained by mixing a calcium source substance, a strontium source substance, a europium source substance, an aluminum source substance, and a specific silicon nitride powder to satisfy the ratio of constituent elements except for nitrogen in a composition represented by composition formula (1):

$$(Ca_{1-x1-x2}Sr_{x1}Eu_{x2})_aAl_bSi_cN_{2a/3+b+4/3c} \qquad (1)$$

(wherein 0.49<x1<1.0, 0.0<x2<0.02, 0.9≤a≤1.1, 0.9≤b≤1.1, and 0.9≤c≤1.1), and firing the mixture.

The nitride phosphor of the present invention produced using a specific silicon nitride powder as a raw material has a fluorescence peak wavelength of 630 to 646 nm, further from 630 to 640 nm, and exhibits high luminance and practical external quantum efficiency.

First, the silicon nitride powder of the present invention (the specific silicon nitride powder used for the production of the nitride phosphor), which is a characteristic feature of the present invention, is described.

The specific surface area FS of the silicon nitride powder of the present invention is from 5 to 35 $m^2/g$, preferably from 10 to 35 $m^2/g$. If the specific surface area is less than 5 $m^2/g$, the surface energy of the particle is reduced. Such a silicon nitride powder exhibits poor reactivity, and a higher temperature is required in the synthesis of the phosphor. If the specific surface are exceeds 35 $m^2/g$, the surface energy of the particle increases, but the obtained nitride phosphor is likely to become an aggregate of small particles, making it difficult to control the particle size of the nitride phosphor.

In the present invention, with respect to oxygen in the silicon nitride powder for a nitride phosphor of the present invention, the oxygen existing in a region from the particle surface to 3 nm beneath the particle surface is designated as surface oxygen, the oxygen existing in a more inward side than 3 nm beneath the particle surface is designated as internal oxygen, the content ratio of surface oxygen relative to the silicon nitride particle is designated as FSO (mass%), and the content ratio of internal oxygen relative to the silicon nitride particle is designated as FIO (mass%).

In the present invention, the ratio FS/FSO (($m^2/g$)/(mass%)) between the specific surface area FS ($m^2/g$) of the silicon nitride powder and the mass ratio FSO (mass%) of oxygen existing in a region from the particle surface to 3 nm beneath the particle surface relative to the silicon nitride powder is from 8 to 53, preferably from 10 to 53, furthermore, may be from 10 to 40. When FS/FSO is from 8 to 53, the wettability or reactivity of the silicon nitride powder with other raw materials is increased, and not only the phosphor powder can be synthesized at a lower temperature but also the composition control is facilitated, as a result, a nitride phosphor excellent in the fluorescence properties is obtained. If FS/FSO is less than 8, due to an excessively large proportion of surface oxygen relative to the specific surface area, the amount of oxygen contained in the phosphor powder is increased, and the fluorescence properties are deteriorated. On the other hand, if FS/FSO exceeds 53, the reactivity at the time of synthesis of the phosphor is likely reduced, and this is not preferred.

In the present invention, the ratio FS/FIO (($m^2/g$)/(mass%)) between the specific surface area FS ($m^2/g$) and the mass ratio FIO (mass%) of oxygen existing in a more inward side than 3 nm beneath the particle surface relative to the silicon nitride powder is 20 or more. If FS/FIO is less than 20, due to an excessively large amount of internal oxygen relative to the specific surface area, the amount of oxygen contained in the phosphor powder is increased, and the fluorescence properties are deteriorated. The upper limit of the ratio FS/FIO is not limited, but the upper limit is practically 150, furthermore 100, particularly 50. The lower limit of the ratio FS/FIO is 20 but may be 25 or more.

The content ratio of surface oxygen and the content ratio of internal oxygen of the silicon nitride powder according to the present invention can be measured by the following method. First, the silicon nitride powder is weighed, and FTO (mass%) that is the content ratio of entire oxygen, i.e., the total amount of surface oxygen and internal oxygen of the silicon nitride powder, is measured by an inert gas melting-carbon dioxide infrared absorption method (Model TC-136, manufactured by LECO Corporation) in conformity with the oxygen quantification method of JIS R1603-10. Next, the weighed silicon nitride powder is subjected to mixing of the silicon nitride powder and an aqueous hydrofluoric acid solution such that hydrogen fluoride accounts for 5 parts by mass per parts by mass of the silicon nitride powder, and stirred at room temperature for 3 hours. After suction filtration, the solid material obtained is vacuum-dried at 120°C for 1 hour, and the weight of this hydrofluoric acid-treated powder is measured. The oxygen content of the obtained powder is measured by an infrared absorption spectrum method (Fourier transform spectrophotometer, Model FTS7000e, manufactured by Agilent technologies), and the value of oxygen content ratio here is taken as FIO before correction (mass% of the hydrofluoric acid-treated powder). The content ratio FIO (mass% relative to the silicon nitride powder) of internal oxygen is calculated according to the following formula (2). The content ratio FSO (mass% relative to the silicon nitride powder) of surface oxygen is calculated according to the following formula (3).

```
FIO (mass%)=((mass (g) of hydrofluoric acid-treated
powder)/(mass (g) of silicon nitride powder)×FIO before
correction (mass%)                                    (2)
```

```
FSO (mass%)=FTO (mass%)-FIO (mass%)           (3)
```

The thus-determined surface oxygen is attributable to oxygen existing in a region from the particle surface to 3 nm beneath the particle surface, and although this is confirmed by the X-ray photoelectron spectrum depth profile of the powder before and after the hydrofluoric acid treatment and the change in weight of the powder between before and after the treatment, the etching rate of the hydrofluoric acid treatment is constant in the silicon nitride powder according to the present invention when etched to a depth of 3 nm beneath the particle surface. It can be confirmed by observation under a transmission electron microscope that in the silicon nitride powder according to the present invention, an amorphous oxide layer is present on the particle surface. The etching rate of the amorphous oxide layer is larger than that of silicon nitride in the inward side below the layer of the particle, but the amorphous oxide layer is as very thin as a few angstrom and since the thickness is modest compared with the etching thickness of 3 nm, the etching rate to a depth of 3 nm beneath the particle surface is not affected. In addition, as long as the oxygen content is around the content ratio of oxygen existing in a region from the particle surface to 3 nm beneath the particle surface of the silicon nitride powder according to the present invention, the etching rate of silicon nitride is constant irrespective of the ratio. For these reasons, in the silicon nitride powder according to the present invention, a region from the particle surface to a depth of 3 nm beneath the particle surface can be dissolved with good reproducibility by the above-described hydrofluoric acid treatment.

The silicon nitride powder for a nitride phosphor of the present invention is produced by the following method.

An amorphous Si-N(-H)-based compound where the specific surface area is from 300 to 1,200 $m^2$/g and assuming that the specific surface area is RS ($m^2$/g) and the oxygen content ratio is RO (mass%), RS/RO (($m^2$/g)/(mass%)) is from 300 to 5,000, preferably from 300 to 3,000, is fired at a temperature of 1,400 to 1,700°C by heating at a temperature rising rate of 12 to 110°C/min in a temperature range from 1,000 to 1,400°C in a nitrogen-containing inert gas atmosphere or a nitrogen-containing reducing gas atmosphere while flowing the compound in a continuous firing furnace, whereby the silicon nitride powder for use in the present invention can be produced.

The amorphous Si-N(-H)-based compound is an amorphous Si-N-H-based compound containing Si, N and H elements or an amorphous silicon nitride containing Si and N, each obtained by thermally decomposing part or the whole of a nitrogen-containing silane compound such as silicon diimide, silicon tetraamide or silicon chloroimide, and is represented by the following composition formula (4). Incidentally, in the present invention, the amorphous Si-N(-H)-based compound encompasses all of a series of compounds represented by composition formula (4) from $Si_6N_1(NH)_{10.5}$ when x=0.5 to amorphous $Si_3N_4$ when x=4, and $Si_6N_6(NH)_3$ when x=3 is called silicon nitrogen imide.

$$Si_6N_{2x}(NH)_{12-3x} \qquad (4)$$

(wherein x=0.5 to 4; although not shown in the composition formula, the compound includes a compound containing a halogen as an impurity).

As the nitrogen-containing silane compound for use in the present invention, silicon diimide, silicon tetraamide, silicon chloroimide, etc., are used. These compounds are represented by the following composition formula (4). In the present invention, for the sake of convenience, the nitrogen-containing silane compound represented by the following composition formula (5) where y=8 to 12 is referred to as silicon diimide.

$$Si_6(NH)_y(NH_2)_{24-2y} \qquad (5)$$

(wherein y=0 to 12; although not shown in the composition formula, the compound includes a compound containing a halogen as an impurity).

These are produced by a known method, for example, a method of reacting a silicon halide such as silicon tetrachloride, silicon tetrabromide or silicon tetraiodide with ammonia in a gas phase, or a method of reacting the silicon halide above in a liquid form with liquid ammonia.

As the amorphous Si-N(-H)-based compound for use in the present invention, those produced by a known method, for example, a method of thermally decomposing the nitrogen-containing silane compound above at a temperature of 1,200°C or less in a nitrogen or ammonia gas atmosphere, or a method of reacting a silicon halide such as silicon tetrachloride, silicon tetrabromide or silicon tetraiodide with ammonia at a high temperature, are used. The specific surface area of the amorphous SiN(-H)-based compound as a raw material of the silicon nitride powder of the present invention is from 300 to 1,200 $m^2$/g. If the specific surface area is less than 300 $m^2$/g, abrupt crystallization occurs in a temperature range from 1,000 to 1,400°C to allow for production of a needle-like particle or an aggregated particle. When a phosphor powder is produced using such a silicon nitride powder, the particle size control of the phosphor powder becomes difficult and at the same time, the fluorescence properties are deteriorated.

The amorphous Si-N(-H)-based compound of the present invention is an amorphous Si-N(-H)-based compound where assuming that the specific surface area of the amorphous Si-N(-H)-based compound is RS ($m^2$/g) and the oxygen content ratio is RO (mass%), RS/RO is from 300 to 5,000, preferably from 300 to 3,000. If RS/RO is less than 300, FS/FIO of the obtained silicon nitride powder becomes small, and the concentration of oxygen contained in the phosphor powder increases, leading to deterioration of the fluorescence properties. If the ratio exceeds 3,000, the specific surface area of the obtained silicon nitride powder is disadvantageously reduced.

The oxygen content ratio of the amorphous Si-N(-H)-based compound can be adjusted by controlling the oxygen amount in the nitrogen-containing silane compound and the oxygen partial pressure (oxygen concentration) in the atmosphere at the thermal decomposition of the nitrogen-containing silane compound. As the oxygen amount in the nitrogen containing silane compound is smaller or as the oxygen partial pressure in the atmosphere at the thermal decomposition is lower, the oxygen content ratio of the amorphous Si-N(-H)-based compound can be reduced. The oxygen content ratio of the nitrogen-containing silane compound can be adjusted by the concentration of oxygen in the atmosphere gas during reaction in the case of reacting a silicon halide such as silicon tetrachloride, silicon tetrabromide or silicon tetraiodide with ammonia in a gas phase, and can be adjusted by controlling the water amount in an organic reaction solvent such as toluene in the case of reacting the silicon halide above with liquid ammonia. As the water amount in an organic reaction solvent is smaller, the oxygen content ratio of the nitrogen-containing silane compound can be reduced.

On the other hand, the specific surface area of the amorphous Si-N(-H)-based compound can be adjusted by the specific surface area of the nitrogen-containing silane compound as a raw material and the maximum temperature at the thermal decomposition of the nitrogen-containing silane compound. As the specific surface area of the nitrogen-containing silane compound is larger or as the maximum temperature at the thermal decomposition is lower, the specific surface area of the amorphous Si-N(-H)-based compound can be increased. The specific surface area of the nitrogen-containing silane compound can be adjusted, when the nitrogen-containing silane compound is silicon diimide, by a known method described, for example, in Patent Document 7, i.e., a method of changing the ratio between the silicon halide and the liquid ammonia (silicon halide/liquid ammonia (volume ratio)) at the reaction of a silicon halide with liquid ammonia. The specific surface area of the nitrogen-containing silane compound can be made large by increasing the above-described silicon halide/liquid ammonia ratio.

In the present invention, at the firing of the amorphous Si-N(-H)-based compound in a nitrogen-containing inert gas atmosphere or a nitrogen-containing reducing gas atmosphere, the amorphous Si-N(-H)-based compound is fired at a temperature of 1,400 to 1,700°C by using a continuous firing furnace. As the heating furnace used for heating of the amorphous Si-N(-H)-based compound, a continuous firing furnace such as rotary kiln furnace, shaft kiln furnace and fluidized firing furnace is used. Such a continuous firing furnace is an effective measure for the efficient diffusion of heat generated in association with a crystallization reaction of the amorphous silicon nitride. Among these continuous firing furnaces, a rotary kiln furnace is suitable for forming a homogeneous powder, because the powder is transferred under stirring by the rotation of the furnace tube and in turn, the heat of crystallization can be efficiently dissipated, and this is a particularly preferable firing furnace.

The amorphous Si-N(-H)-based compound may be molded in a granular shape. When molded in a granular shape, the flowability of the powder is increased and at the same time, the bulk density can be increased, so that the processing capacity in a continuous firing furnace can be raised. In addition, the heat conduction state of the powder layer in a continuous firing furnace can also be improved.

The specific surface area of the amorphous Si-N(-H)-based compound as a raw material of the silicon nitride powder of the present invention is from 300 to 1,200 $m^2$/g. If the specific surface area is less than 300 $m^2$/g, abrupt crystallization occurs in a temperature range from 1,000 to 1,400°C to allow for production of a needle-like particle or an aggregated particle. When a phosphor is produced using such a powder, the particle size control of the phosphor particle becomes difficult and at the same time, the fluorescence properties are disadvantageously deteriorated. On the other hand, if the specific surface area exceeds 1,200 $m^2$/g, the $\alpha$ fraction of the crystalline silicon nitride powder becomes small and in turn, the reactivity at the synthesis of the phosphor is reduced, as a result, firing at a higher temperature is required when synthesizing the phosphor.

Most of oxygen contained in the amorphous Si-N(-H)-based compound remains in the crystalline silicon nitride powder after firing. In addition, at the firing the amorphous Si-N(-H)-base compound in a nitrogen-containing inert gas atmosphere or a nitrogen-containing reducing gas atmosphere, weight loss occurs in association with decomposition and desorption of excess nitrogen, and the oxygen content is relatively increased. Accordingly, the oxygen content of the amorphous Si-N(-H)-based compound is preferably 1 mass% or less, more preferably 0.5 mass% or less.

During firing in a continuous firing furnace, the maximum temperature inside the furnace tube, i.e., the firing temperature, is from 1,400 to 1,700°C. If the firing temperature is less than 1,400°C, crystallization does not proceed sufficiently, and a large amount of amorphous silicon nitride powder is disadvantageously contained in the silicon nitride powder. In addition, if the firing temperature exceeds 1,700°C, this is not preferred, because not only a coarse crystal grows but also the produced crystalline silicon nitride powder starts decomposing.

In the present invention, at the firing in a continuous firing furnace, the amorphous Si-N(-H)-based compound is preferably heated by raising the temperature at a rate of 15 to 60°C/min in a temperature range from 1,000 to 1,400°C. This is described below.

In the present invention, the amorphous Si-N(-H)-based compound is fired to obtain a silicon nitride powder.

In the temperature range from 1,000 to 1,400°C during firing, a crystal nucleus is generated in the amorphous silicon nitride powder, crystallization of the amorphous silicon nitride starts while releasing the heat of crystallization, and the crystallized silicon nitride undergoes grain growth.

At the firing, heating at a temperature rising rate of 12 to 110°C/min, preferably from 15 to 60°C/min, is performed in a temperature range from 1,000 to 1,400°C, whereby the surface energy due to grain growth of the amorphous silicon nitride before crystallization is decreased and not only a proper generation density of crystal nuclei is achieved but also grain growth at the initial stage of crystallization is suppressed, making it possible to obtain a crystalline silicon nitride powder having a particle shape more suitable for the synthesis of a phosphor powder and a sharper grain size distribution.

Incidentally, the temperature rising rate at the heating the amorphous Si-N(-H)-based compound in the present invention can be set by adjusting the temperature distribution inside the furnace tube of the continuous firing furnace and the transfer rate of the powder. For example, in a rotary kiln furnace, the amorphous silicon nitride and/or nitrogen containing silane compound as the raw material powder are fed into the furnace tube from a feeder provided at the inlet of the furnace tube and transferred to the maximum temperature part at the center of the furnace tube by the rotation and gradient of the furnace tube. The temperature distribution from the furnace tube inlet to the maximum temperature part can be adjusted by the temperature setting of a heater for heating, and the transfer rate of the raw material powder can be adjusted by the rotation speed and gradient of the furnace tube.

In the production of the silicon nitride powder for use in the present invention, firing is performed by adjusting the temperature rising rate in a specific temperature range to a specific range, in addition to flowing the raw material, whereby the silicon nitride powder of the present invention having a specific surface area, specific surface oxygen and specific internal oxygen and being suitable for a $(Ca,Sr)AlSiN_3$:Eu phosphor can be obtained.

In a method of housing the amorphous Si-N(-H)-based compound as a raw material in a crucible, etc., and firing the raw material without flowing it in a batch furnace, a pusher furnace, etc., the silicon nitride powder of the present invention cannot be obtained. This is described below.

In the case of a method of firing the raw material without flowing it, compared with the method of firing the raw material while flowing it, as described below, an amorphous Si-N(-H)-based compound having a relatively large oxygen amount needs to be used so as to increase the specific surface area , and therefore the ratio of internal oxygen relative to the specific surface area of the silicon nitride powder obtained cannot be easily reduced. In the method of housing an amorphous Si-N(-H)-based compound as a raw material in a crucible, etc., and firing the raw material without flowing it in a batch furnace, a pusher furnace, etc., as described above, because of difficulty in efficiently dissipating the heat of crystallization, the temperature of the silicon nitride powder in the crystallization process locally rises abruptly due to the heat of crystallization, and the produced silicon nitride powder is likely to be partially or wholly crystallized as a columnar crystal or a needle-like crystal. In this case, the silicon nitride powder can be prevented from columnar crystallization or needle-like crystallization by forming the amorphous SiN(-H)-based compound into a granular shape to improve the heat transfer and reducing the temperature rising rate at the firing (Patent Document 8), but the specific surface area of the obtained silicon nitride powder becomes small due to the reduced temperature rising rate. Because, when the temperature rising rate during firing is low, compared with a high temperature rising rate, nucleus growth proceeds to make the silicon nitride particle large, though the nucleation temperature of silicon nitride is not changed. In order to obtain a silicon nitride powder having a large specific surface area at a low temperature rising rate, an amorphous Si-N(-H)-based compound having a small specific surface area and a high oxygen content ratio needs to be used as the raw material to increase the degree of supersaturation. The reason therefor is considered as follows.

In the step of firing an amorphous Si-N(-H)-based compound, the Si source gas species (particularly SiO) evolved from the raw material surface promotes the nucleation and growth of silicon nitride. When the specific surface area of the raw material is small, the vapor pressure of SiO is low at the low temperature of the firing step, and the SiO concentration is increased at a high temperature, as a result, the degree of supersaturation near the particle is elevated at the high temperature, causing nucleation of silicon nitride. When nucleation occurs at a high temperature, despite the low temperature rising rate, the number of nuclei generated is increased and since the growth proceeds in a short time, the silicon nitride particle becomes small. Furthermore, when the oxygen content ratio of the raw material is high, the nucleation temperature is high, and similarly to the case where the degree of supersaturation near the particle during nucleation is high and the specific surface area of the raw material is small, the silicon nitride particle is considered to become small. Accordingly, for obtaining a silicon nitride powder having a large specific surface area by the method of firing the raw material without flowing it, where firing at a low temperature rising rate is required, a raw material having a small specific surface area and a large oxygen amount must be used.

However, when an amorphous Si-N(-H)-based compound having a high oxygen content ratio is used as the raw material, the oxygen content ratio inside the obtained silicon nitride particle becomes high. Therefore, in the silicon nitride powder having a specific surface area suitable for sintering, which is obtained by the conventional method of firing the raw material without flowing it, the oxygen content ratio inside the particle becomes high, compared with a silicon nitride powder having the same specific surface area, which is obtained by firing the raw material while flowing it.

As described above, compared with the case of firing the raw material while flowing it, in the method of firing the raw material without flowing it, the content ratio of internal oxygen relative to the specific surface area of the obtained silicon nitride powder becomes high, making it difficult to obtain a silicon nitride powder having a large FS/FIO ratio, and the silicon nitride powder for use in the present invention cannot be obtained.

The silicon nitride powder for use in the present invention is a silicon nitride powder suitable for a raw material of a nitride phosphor, in which the specific surface area is from 5 to 35 $m^2/g$ and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS ($m^2/g$), FS/FSO is from 8 to 53 and FS/FIO is 20 or more, and which is obtained by firing an amorphous Si-N(-H)-based compound where assuming that the specific surface area of the amorphous Si-N(-H)-based compound is RS ($m^2/g$) and the oxygen content ratio is RO (mass%), RS/RO is from 300 to 5,000, preferably from 300 to 3,000, at a temperature of 1,400 to 1,700°C by heating at a temperature rising rate of 12 to 110°C/min in a temperature range from 1,000 to 1,400°C in a nitrogen-containing inert gas atmosphere or a nitrogen-containing reducing gas atmosphere while flowing the compound in a continuous firing furnace.

Incidentally, the above-described pusher furnace is a firing furnace equipped with a furnace chamber capable of controlling the temperature and atmosphere conditions, where a plurality of trays each having loaded thereon a crucible, etc., housing a ceramic raw material as a to-be-fired material are pushed sequentially into a furnace by a pusher mechanism and transported to thereby perform firing of the to-be-fired material.

The oxygen content ratio of the amorphous Si-N(-H)-based compound according to the present invention is also measured, similarly to the silicon nitride powder, by an inert gas melting-carbon dioxide infrared absorption method (Model TC-136, manufactured by LECO Corporation) in conformity with the oxygen quantification method of JIS R1603-10, but in order to suppress oxidation of the amorphous Si-N(-H)-based compound, the atmosphere during sample storage until immediately before measurement and at the measurement is set to a nitrogen atmosphere.

The method for producing the nitride phosphor of the present invention by using the silicon nitride powder of the present invention as a raw material is described specifically below.

The method for producing a nitride phosphor of the present invention is characterized by:

mixing a calcium source substance, a strontium source substance, a europium source substance, an aluminum source substance, and a silicon nitride powder in which the specific surface area is from 5 to 35 $m^2/g$ and assuming that the mass ratio of oxygen existing in a region from the particle surface to 3 nm beneath the particle surface relative to the silicon nitride powder is FSO (mass%), the mass ratio of oxygen existing in a more inward side than 3 nm beneath the particle surface relative to the silicon nitride powder is FIO (mass%), and the specific surface area is FS ($m^2/g$), FS/FSO (($m^2/g$)/(mass%)) is from 8 to 53 and FS/FIO (($m^2/g$)/(mass%)) is 20 or more, to satisfy the ratio of constituent elements except for nitrogen in a composition represented by composition formula (1):

$$(Ca_{1-x1-x2}Sr_{x1}Eu_{x2})_aAl_bSi_cN_{2a/3+b+4/3c} \qquad (1)$$

(wherein 0.49<x1<1.0, 0.0<x2<0.20, 0.9≤a≤1.1, 0.9≤b≤1.1, and 0.9≤c≤1.1), and
firing the mixture.

Here, "mixing a calcium source substance, a strontium source substance, a europium source substance, an aluminum source substance, and the silicon nitride powder of the present invention to satisfy the ratio of constituent elements except for nitrogen in a composition represented by composition formula (1) and firing the mixture" means that when all constituent elements except for nitrogen of the nitrogen phosphor, which are contained in these raw materials, are assumed to remain in the obtained nitride phosphor, raw materials in a composition ratio capable of obtaining a nitride phosphor having a composition represented by composition formula (1) are mixed and fired. Accordingly, formula (1) is a formula of a design composition determining the blending ratio of raw materials and is not a composition formula of the obtained nitride phosphor.

The calcium source substance which is a raw material, is selected from a nitride, an oxynitride, an oxide and a precursor substance becoming an oxide upon thermal decomposition, of calcium. Calcium nitride is preferably used.

The strontium source substance which is a raw material, is selected from a nitride, an oxynitride, an oxide and a precursor substance becoming an oxide upon thermal decomposition, of strontium. Strontium nitride is preferably used.

The europium source substance which is a raw material, is selected from a nitride, an oxynitride, an oxide and a precursor substance becoming an oxide upon thermal decomposition, of europium. Europium nitride is preferably used.

The aluminum source substance which is a raw material, includes aluminum oxide, metallic aluminum, and aluminum nitride. The powders thereof may be used individually or may be used in combination. Aluminum nitride is preferably used.

At the firing, a Li-containing compound as a sintering aid is preferably added for the purpose of promoting sintering and producing a nitride phosphor at a lower temperature, although this is optional. The Li-containing compound used includes lithium oxide, lithium carbonate, metallic lithium and lithium nitride, and the powders thereof may be used individually or may be used in combination. The amount of the Li-containing compound added is, in terms of Li element, suitably from 0.01 to 0.5 mol per mol of the fired nitride. The fired nitride as used herein is a fired material composed of a (Ca,Sr)AlSiN$_3$:Eu phosphor, obtained by mixing and firing raw materials of the nitride phosphor of the present invention, and indicates a phosphor before the later-described cracking/classification.

The method for mixing a calcium source substance, a strontium source substance, a europium source substance, an aluminum source substance, and the silicon nitride powder is not particularly limited, and methods known per se, for example, a method of dry mixing the raw materials, and a method of wet mixing the raw materials in an inert solvent substantially incapable of reacting with respective components of raw materials and thereafter, removing the solvent, may be employed. As the mixing device, a V-type mixer, a rocking mixer, a ball mill, a vibration mill, a medium stirring mill, etc., are suitably used.

A mixture of a calcium source substance, a strontium source substance, a europium source substance, an aluminum source substance, and the silicon nitride powder is fired in an inert gas atmosphere, whereby a fired nitride represented by the composition formula above can be obtained. The firing temperature is preferably from 1,300 to 1,700°C, more preferably from 1,400 to 1,600°C. If the firing temperature is less than 1,400°C, the production of a fired nitride requires heating for a long time, which is not practical. If the firing temperature exceeds 1,600°C, the amount of strontium evaporated is likely increased, and a nitride phosphor with high luminance cannot be easily obtained. As long as firing at 1,300 to 1,700°C in an inert gas atmosphere is possible, the heating furnace used for firing is not particularly limited. For example, a high-frequency induction heating- or resistance heating-system batch-type electric furnace, a rotary kiln, a fluidized firing furnace, and a pusher-type electric furnace may be used. As for the crucible that is filled with the mixture, a BN-made crucible, a silicon nitride-made crucible, a graphite-made crucible, and a silicon carbide-made crucible may be used. The fired nitride composed of a (Ca,Sr)AlSiN$_3$:Eu phosphor, obtained by firing, is a powder with less aggregation and high dispersibility.

The nitride phosphor of the present invention is described below.

The nitride phosphor according to the present invention is a nitride phosphor obtained by, as described above, mixing a calcium source substance, a strontium source substance, a europium source substance, an aluminum source substance, and the silicon nitride powder of the present invention to satisfy the ratio of constituent elements except for nitrogen in a composition represented by composition formula (1):

$$(Ca_{1-x1-x2}Sr_{x1}Eu_{x2})_aAl_bSi_cN_{2a/3+b+4/3c} \qquad (1)$$

(wherein 0.49<x1<1.0, 0.0<x2<0.02, 0.9≤a≤1.1, 0.9≤b≤1.1, and 0.9≤c≤1.1), and firing the mixture.

The nitride phosphor composed of a (Ca,Sr)AlSiN$_3$:Eu phosphor of the present invention represented by formula (1) is excited by excitation light of 300 to 500 nm and emits fluorescence having a peak wavelength of 630 to 646 nm. In this phosphor, europium (Eu) acts as a divalent activator.

The nitride phosphor composed of a (Ca,Sr)AlSiN$_3$:Eu phosphor is usually obtained by mixing a calcium source substance, a strontium source substance, a europium source substance, an aluminum source substance, and a silicon source substance, and firing the mixture in an inert gas atmosphere. At this time, strontium is readily evaporated during firing, and the strontium content ratio in the obtained phosphor powder is decreased. Therefore, a (Ca,Sr)AlSiN$_3$:Eu phosphor having luminance worthy of practical use cannot be easily obtained.

In the present invention, a nitride phosphor composed of a (Ca,Sr)AlSiN$_3$:Eu phosphor having luminance worthy of practical use is provided by using a specific silicon nitride powder for the silicon source substance. More specifically, the nitride phosphor obtained by the production method of the present invention is a (Ca,Sr)AlSiN$_3$:Eu phosphor having luminance worthy of practical use, which is produced using, as a silicon source, a silicon nitride powder characterized in that the specific surface area is from 5 to 35 m$^2$/g and assuming that the mass ratio of oxygen existing in a region from the particle surface to 3 nm beneath the particle surface relative to the silicon nitride powder is FSO (mass%), the mass ratio of oxygen existing in a more inward side than 3 nm beneath the particle surface relative to the silicon nitride powder is FIO (mass%), and the specific surface area is FS (m$^2$/g), FS/FSO ((m$^2$/g)/(mass%)) is from 8 to 53 and FS/FIO ((m$^2$/g)/(mass%)) is 20 or more.

In the case where the nitride phosphor is a composition represented by composition formula (1), a phosphor having an emission peak wavelength of 630 to 646 nm is obtained and at the same time, a phosphor of which luminance is also worthy of practical use is obtained. On the other hand, if the nitride phosphor is a composition represented by the composition formula above where x1≤0.49, the fluorescence peak wavelength of the obtained nitride phosphor becomes 647 nm or more, and a phosphor having the desired fluorescence properties is not obtained. In addition, if the nitride phosphor is a composition represented by the composition formula above where x2≥0.02, the luminance and external quantum efficiency are reduced, and a phosphor having the desired fluorescence properties is not obtained. Furthermore, if the nitride phosphor is a composition represented by the formula above where a>1.1, a composition where a<0.9, a composition where b>1.1, a composition where b<0.9, a composition where c>1.1, or a composition where c<0.9, the luminance and external quantum efficiency are reduced, and a phosphor having the desired fluorescence properties is not obtained.

In the case where the nitride phosphor is a composition represented by composition formula (1) where 0.69<x1<1.00 and 0.00<x2<0.01, a phosphor having an emission peak wavelength of 630 to 640 nm is obtained and at the same time, the luminance and external quantum efficiency are increased, which is preferred.

In the case where the nitride phosphor is a composition represented by composition formula (1) where a=1.0, b=1.0 and c=1.0, in addition to 0.69<x1<1.00 and 0.00<x2<0.01, a phosphor having an emission peak wavelength of 630 to 640 nm is obtained and at the same time, the luminance and external quantum efficiency are more increased, which is particularly preferred.

The $(Ca,Sr)AlSiN_3$:Eu phosphor that is the nitride phosphor of the present invention produced to provide a composition represented by composition formula (1):

$$Ca_{1-x1-x2}Sr_{x1}Eu_{x2})_aAl_bSi_cN_{2a/3+b+4/3c} \qquad (1)$$

(wherein $0.49<x1<1.0$, $0.0<x2<0.02$, $0.9\leq a\leq1.1$, $0.9\leq b\leq1.1$, and $0.9\leq c\leq1.1$) is, as described in Patent Document 6, a phosphor containing a $CaAlSiN_3$ group crystal as a main component, and it is known that when a=b=c=1 in the formula above, the proportion of the $CaAlSiN_3$ group crystal produced is increased and the luminance becomes high.

Likewise, in the nitride phosphor of the present invention, when $0.69<x1<1.0$, $0.00<x2\leq0.01$, a=1.00, b=1.00 and c=1.00 in composition formula (1), fluorescence having a relatively short wavelength with a fluorescence peak wavelength of 630 to 640 nm is emitted, and the external quantum efficiency there is 45% or more, revealing excellent fluorescence properties.

In order to allow the nitride phosphor obtained by the production method of the present invention to be suitably used as a phosphor for white LED, $D_{50}$ that is a 50% diameter in the particle size distribution curve is preferably from 10.0 to 20.0 $\mu$m. If $D_{50}$ is less than 10.0 $\mu$m, the emission intensity may decrease, whereas if $D_{50}$ exceeds 20.0 $\mu$m, uniform dispersion in the resin encapsulating the phosphor becomes difficult, and a variation may be produced in the color tone of white LED. Here, $D_{50}$ of the nitride phosphor is a 50% diameter in the particle size distribution curve measured by a laser diffraction/scattering particle size distribution analyzer. In the production method of the present invention, a powder satisfying the $D_{50}$ above can be obtained, without a pulverization treatment, by cracking and classifying the nitride phosphor obtained after firing.

The nitride phosphor obtained by the production method of the present invention can emit fluorescence having a peak wavelength in the wavelength region of 630 nm to 646 nm when excited by light in the wavelength region of 450 nm and on this occasion, exhibits an external quantum efficiency of 40% or more. Therefore, when the nitride phosphor of the present invention is used, long wavelength red fluorescence can be efficiently obtained by blue excitation light and in addition, white light with good color rendering property can be efficiently obtained by the combination with blue light used as excitation light.

The particularly preferable nitride phosphor obtained by the production method of the present invention is a nitride phosphor produced to provide a composition where in composition formula (1), $0.69<x1<1.0$, $0.00<x2\leq0.01$, a=1.00, b=1.00, and c=1.00, and is a $(Ca,Sr)AlSiN_3$:Eu phosphor that emits fluorescence having a peak wavelength of 630 to 640 nm when excited by light at a wavelength of 450 nm, exhibits on this occasion an external quantum efficiency of 45% or more, and has an unprecedented high external quantum efficiency for a phosphor having the above-described peak wavelength.

The nitride phosphor of the present invention is a nitride phosphor obtained by mixing a calcium source substance, a strontium source substance, a europium source substance, an aluminum source substance, and a silicon nitride powder in which the specific surface area is from 5 to 35 $m^2$/g and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS ($m^2$/g), FS/FSO (($m^2$/g)/(mass%)) is from 8 to 53 and FS/FIO (($m^2$/g)/(mass%)) is 20 or more, to satisfy the ratio of constituent elements except for nitrogen in a composition represented by composition formula (1) :

$$(Ca_{1-x1-x2}Sr_{x1}Eu_{x2})_aAl_bSi_cN_{2a/3+b+4/3c} \qquad (1)$$

(wherein $0.49<x1<1.0$, $0.0<x2<0.02$, $0.9\leq a\leq1.1$, $0.9\leq b\leq1.1$, and $0.9\leq c\leq1.1$), and firing the mixture, wherein the nitride phosphor emits fluorescence having a peak wavelength of 630 to 640 nm when excited by light at a wavelength of 450 nm and on this occasion, exhibits an external quantum efficiency of 40%, more preferably 45% or more.

It is more preferred that in composition formula (1), x1 and x2 are 0.69<x1<1.00 and 0.00<x2<0.01, and a, b and c are a=1, b=1 and c=1.

The nitride phosphor of the present invention may have a composition represented by composition formula (1'):

$$(Ca_{1-x1'-x2'}Sr_{x1'}Eu_{x2'})_{a'}Al_{b'}Si_{c'}N_{2a'/3+b'+4/3c'} \qquad (1')$$

(wherein 0.49<x1'<1.0, 0.0<x2'<0.02, 0.9≤a≤1.1, 0.9≤b'≤1.1, and 0.9≤c'≤1.1), and this is preferred.

In the nitride phosphor of the present invention, with respect to x1 in composition formula (1) and x1' in composition formula (1'), the ratio x1'/x1 may be preferably 0.90 or more, more preferably 0.94 or more.

The fluorescence peak wavelength can be measured by a solid quantum efficiency measuring apparatus fabricated by combining an integrating sphere with FP6500 manufactured by JASCO. The fluorescence spectrum correction can be performed using a secondary standard light source, but the fluorescence peak wavelength sometimes slightly varies depending on the measuring device used or correction conditions.

In addition, after measuring the absorptivity and internal quantum efficiency by a solid quantum efficiency measuring apparatus fabricated by combining an integrating sphere with FP6500 manufactured by JASCO, the external quantum efficiency can be calculated from the product thereof.

The nitride phosphor of the present invention can be used as a light-emitting device for various lighting apparatuses by combining it with a known light-emitting source such as a light-emitting diode.

Among others, a light-emitting source capable of emitting excitation light having a peak wavelength of 330 to 500 nm is suitable for use with the nitride phosphor of the present invention. The nitride phosphor exhibits a high luminous efficiency in the ultraviolet region and enables fabrication of a light-emitting device having high performance. The luminous efficiency is high also when using a blue light source, and a light-emitting device providing excellent daytime white-to-daylight color can be fabricated by the combination of yellow-orange fluorescence of the nitride phosphor of the present invention with blue excitation light.

EXAMPLES

The present invention is described in detail below by referring to Examples, but the present invention is not limited to these Examples.

First, Examples of the silicon nitride powder used for the production of the nitride phosphor of the present invention are described.

(Method for Measuring Specific Surface Area)

The specific surface area of the silicon nitride powder was measured according to a BET one-point method by nitrogen gas adsorption (Flowsorb 2300, manufactured by Shimadzu Corporation).

(Method for Measuring $D_{50}$ (50% diameter in particle size distribution curve))

$D_{50}$ that is a 50% diameter in the particle size distribution curve of the nitride phosphor was measured by a laser diffraction/scattering particle diameter distribution analyzer (LA-910, manufactured by Horiba, Ltd.).

(Method for Measuring Crystallization Degree)

The accurately weighed silicon nitride powder was added to an aqueous 0.5 N NaOH solution and heated at 100°C. The $NH_3$ gas evolved by the decomposition of silicon nitride was absorbed by an aqueous 1% boric acid solution, and the $NH_3$ amount in the absorbing solution was titrated with a 0.1 N sulfuric acid standard solution. The decomposed nitrogen amount was calculated from the $NH_3$ amount in the absorbing solution. The crystallization degree was calculated from the decomposed nitrogen amount and the theoretical nitrogen amount of 39.94% of silicon nitride according to the following formula (6):

```
Crystallization degree (%)=100-(decomposed nitrogen
amount×100/39.94)                    (6)
```

(Measuring Method of Strontium Content Percentage)

The strontium content percentage of the nitride phosphor was measured by the following method. Out of constituent elements of the nitride phosphor of the present invention, quantitative analysis of Ca, Sr, Eu, Al and Si was performed by a fluorescent X-ray elemental analyzer (ZSX Primus, manufactured by Rigaku Corporation). In addition, quantitative analysis of N was performed by an oxygen/nitrogen/hydrogen simultaneous analyzer (Model TCH600, manufactured by LECO Corporation). From these analysis results, the ratio of constituent elements of the obtained nitride phosphor was determined. The strontium content percentage is defined as x1' when the obtained nitride phosphor is represented by the composition formula:

$$(Ca_{1-x1'-x2'}Sr_{x1'}Eu_{x2'})_{a'}Al_{b'}Si_{c'}N_{d'} \qquad (7)$$

(Method for Measuring FS/FSO Value and FS/FIO Value)

The silicon nitride powder was weighed, and FTO (mass%) that is the content ratio of entire oxygen, i.e., the total of surface oxygen and internal oxygen of the silicon nitride powder, was measured by an inert gas melting-carbon dioxide infrared absorption method (Model TC-136, manufactured by LECO Corporation) in conformity with the oxygen quantification method of JIS R1603-10. Next, the weighed silicon nitride powder was subjected to mixing of the silicon nitride powder and an aqueous hydrofluoric acid solution such that hydrogen fluoride accounts for 5 parts by mass per parts by mass of the silicon nitride powder, and stirred at room temperature for 3 hours. After suction filtration, the solid material obtained was vacuum-dried at 120°C for 1 hour, and the weight of this hydrofluoric acid-treated powder was measured. The oxygen content of the obtained powder was measured by an infrared absorption spectrum method (Fourier transform spectrophotometer, Model FTS7000e, manufactured by Agilent technologies), and the value of oxygen content ratio here was taken as FIO before correction (mass% relative to the hydrofluoric acid-treated powder). The content ratio FIO (mass% relative to the silicon nitride powder) of internal oxygen was calculated according to the following formula (2). The content ratio FSO (mass% relative to the silicon nitride powder) of surface oxygen was calculated according to the following formula (3). The thus-determined surface oxygen is attributable to oxygen existing in a region from the particle surface to 3 nm beneath the particle surface, and this was confirmed by the X-ray photoelectron spectrum depth profile of the powder before and after the hydrofluoric acid treatment and the change in weight of the powder between before and after the treatment.

```
FIO (mass%)=((mass (g) of hydrofluoric acid-treated
powder)/(mass (g) of silicon nitride powder))×FIO before
correction (mass%)                              (2)
```

```
FSO (mass%)=FTO (mass%)-FIO (mass%)        (3)
```

(Example 1)

The air in a vertical pressure-resistant reactor having a diameter of 40 cm and a height of 60 cm and being kept at 20°C was replaced with nitrogen gas and thereafter, 40 liter of liquid ammonia and 5 liter of toluene were charged into the reactor. In the reactor, the liquid ammonia and toluene were slowly stirred to cause separation into an upper layer of liquid ammonia and a lower layer of toluene. A previously prepared solution (reaction solution) of 2 liter of silicon tetrachloride and 6 liter of toluene containing 0.1 mass% water was fed through a conduit tube to the slowly stirred lower layer inside the reactor. At this time, the volume ratio between silicon tetrachloride fed into the reactor and liquid ammonia in the reactor was 5/100. Along with feeding of the solution above, a white reaction product was precipitated near the interface of the upper layer and the lower layer. After the completion of reaction, the reaction product and residual solution in the reactor were transferred to a filter tank, and the reaction product was separated by filtration and batch-washed four times with liquid ammonia to obtain about 1 kg of silicon diimide having a specific surface area of 1,400 $m^2$/g.

The obtained silicon diimide was packed in a raw material hopper of a rotary kiln furnace having a diameter of 150 mm and a length of 2,800 mm (heating length: 1,000 mm) and after the inside of the rotary kiln furnace was vacuum degassed to 13 Pa or less, a nitrogen gas containing 2% of oxygen was introduced at a total gas flow rate of 250 NL/hour. Heating was then started, and upon reaching the maximum temperature (1,000°C) in the rotary kiln furnace, a raw material-feeding screw feeder was rotated, thereby feeding the silicon diimide into the furnace from the raw material hopper at a powder processing rate of 3 kg/hour. The silicon diimide was heated under the conditions of a tilt angle of kiln of 2°, a rotation speed of 1 rpm and a holding time at the maximum temperature of 10 minutes to obtain an amorphous Si-N(-H)-based compound according to Example 1 shown in Table 1, represented by the composition formula $Si_6N_{8.4}H_{1.2}$, i.e., the formula $Si_6N_{2x}(NH)_{12-3x}$ where x is 3.6.

Subsequently, the obtained amorphous Si-N(-H)-based compound was packed in a raw material hopper of a rotary kiln furnace with an alumina-made furnace tube having an inner diameter of 114 mm and a length of 1,780 mm. The inside of the rotary kiln furnace was sufficiently replaced with nitrogen gas, and the temperature was then raised in a nitrogen gas flow atmosphere until the maximum temperature portion in the furnace reaches the firing temperature shown in Table 1. After the temperature distribution in the furnace was stabilized, the raw material-feeding screw feeder was rotated to feed the amorphous Si-N(-H)-based compound into the furnace from the raw material hopper at a powder processing rate of 2 kg/hour. The amorphous Si-N(-H)-based compound was fired at 1,500°C under heating by setting the rotation speed of the furnace tube to 2 rpm and adjusting the powder transfer rate in the furnace tube by the furnace tube tilt angle such that the temperature rise rate of the powder in a temperature range from 1,000 to 1,400°C becomes 40°C/min, to produce the silicon nitride powder of Example 1.

(Examples 2 to 18 and Comparative Examples 1 to 6)

Amorphous Si-N(-H)-based compounds according to Examples 2 to 18 and Comparative Examples 1 to 6 shown in Table 1 were obtained by the same method as in Example 1 except that the water amount of toluene in the reaction solution fed to the lower layer of the reactor at the synthesis of silicon diimide and the oxygen content ratio of nitrogen gas introduced into the furnace at the decomposition of silicon diimide were appropriately adjusted in a range of 0.01 to 0.5 mass% and in a range of 0.1 to 5%, respectively, so as to control the oxygen content ratio of the obtained amorphous Si-N(-H)-based compound and the maximum temperature of the furnace was adjusted in a range of 800 to 1,100°C so as to control the specific surface area of the obtained amorphous Si-N(-H)-based compound. Incidentally, x in the composition formula $Si_6N_{2x}(NH)_{12-3x}$ of amorphous Si-N(-H)-based compounds according to Examples 2 to 18 was, in order starting from Example 2, 2.7, 2.8, 1.1, 2.6, 2.6, 2.8, 3.5, 2.7, 2.8, 0.8, 3.5, 3.4, 2.7, 0.8, 0.7, 2.9 and 2.8, and x in the composition formula $Si_6N_{2x}(NH)_{12-3x}$ of amorphous Si-N(-H)-based compounds according to Comparative Examples 1 to 6 was, in order starting from Comparative Example 1, 0.6, 0.6, 2.7, 2.6, 0.8 and 2.9. Thereafter, the amorphous Si-N(-H)-based compound was fired in a rotary kiln furnace by the same method as in Example 1 except that these amorphous Si-N(-H)-based compounds were used as the raw material and the temperature rise rate in a temperature range from 1,000 to 1,400°C and the firing temperature were adjusted as shown in Table 1, whereby silicon nitride powders of Examples 2 to 18 and Comparative Examples 1 to 6 were produced.

(Comparative Example 7)

The silicon nitride powder of Comparative Example 7 shown in Table 1 was produced by the following method. The same amorphous Si-N(-H)-based compound as the amorphous Si-N(-H)-based compound according to Example 12 was packed in a graphite-made crucible having an inner diameter of 280 mm and a height of 150 mm, and the crucible was set in a pusher furnace. The inside of the pusher furnace was sufficiently replaced with nitrogen gas, and the temperature was then raised to 1,500°C in a nitrogen gas flow atmosphere. The crucible transport speed was adjusted to heat the powder at a temperature rising rate of 1°C/min in a temperature range from 1,000 to 1,400°C, whereby the silicon nitride powder of Comparative Example 7 was produced.

(Comparative Examples 8 and 9)

The amorphous Si-N(-H)-based compound was fired under the same conditions as in Comparative Example 7 by using the same pusher furnace as in Comparative Example 7 except that the same amorphous Si-N(-H)-based compounds as the amorphous Si-N(-H)-based compounds according to Examples 9 and 10 were used as the raw material, whereby the silicon nitride powders of Comparative Examples 8 and 9 were produced, respectively.

(Comparative Example 10)

The amorphous Si-N(-H)-based compound was fired under the same conditions as in Comparative Example 7 by using the same pusher furnace as in Comparative Example 7 except that the same amorphous Si-N(-H)-based compound as the amorphous Si-N(-H)-based compound according to Example 8 was used as the raw material and the crucible transport speed was adjusted to heat the powder at a temperature rise rate of 0.7°C/min in a temperature range from 1,000 to 1,400°C, whereby the silicon nitride powder of Comparative Example 10 was produced.

The specific surface area, FS/FSO value, FS/FIO value, crystallization degree and particle shape of each of the obtained silicon nitride powders of Examples 1 to 18 and Comparative Examples 1 to 10 were as shown in Table 2.

Next, Examples of the nitride phosphor of the present invention are described.

(Example 21)

The silicon nitride powder of Example 1 shown in Table 2, calcium nitride, strontium nitride, europium nitride and aluminum nitride were weighed in a nitrogen-purged glove box to satisfy x1=0.7936, x2=0.008, a=1, b=1 and c=1, and mixed using a dry vibration mill to obtain a mixed powder. The mixed powder obtained was put in a boron nitride-made crucible, and the crucible was charged into an electric furnace of a graphite resistance heating system. The inside of the electric furnace was pressurized to 0.8 MPa with nitrogen, and the temperature was then raised to 1,500°C and held at 1,500°C for 6 hours to obtain a fired nitride.

The resulting fired nitride was cracked and then classified to obtain a nitride phosphor having a particle diameter of 5 to 20 $\mu$m. When $D_{50}$ and the strontium content percentage of the obtained nitride phosphor were measured, as shown in Table 3, $D_{50}$ was 13.1 $\mu$m, and the strontium content percentage x1' was 0.762. In addition, the ratio x1'/x1 of x1' to x1 that is the strontium content percentage in the design composition was 96.0%, and it could be confirmed that strontium in a ratio substantially equal to that in the design composition was contained in the obtained nitride phosphor.

Furthermore, in order to evaluate the fluorescence properties of the obtained nitride phosphor, the fluorescence spectrum at an excitation wavelength of 450 nm was measured using a solid quantum efficiency measuring apparatus fabricated by combining an integrating sphere with FP-6500 manufactured by JASCO, and the absorptivity and internal quantum efficiency were measured at the same time. The fluorescence peak wavelength and the emission intensity at that wavelength were derived from the obtained fluorescence spectrum, and the external quantum efficiency was calculated from the absorptivity and internal quantum efficiency. In addition, the relative fluorescence intensity indicative of luminance was defined as the relative value of emission intensity at the fluorescence peak wavelength when the value of highest intensity of the emission spectrum by the same excitation wavelength of a commercially available YAG:Ce-based phosphor (P46Y3 produced by Kasei Optonix, Ltd.) is taken as 100%. The fluorescence properties of the nitride phosphor according to Example 21 are shown in Table 3.

(Examples 22 to 38 and Comparative Examples 21 to 23 and 25 to 30)

Fired nitrides were obtained by the same method as in Example 21 except that the silicon nitride powders of Examples 2 to 18 and Comparative Examples 1 to 3 and 5 to 10 shown in Table 2 were used. Incidentally, the silicon nitride powder of Comparative Example 4 is not used as the raw material of the nitride phosphor, because primary particles are fused to form an aggregate and the powder is not suitable as a phosphor powder.

The fired nitride obtained was cracked and then classified to obtain a nitride phosphor having a particle diameter of 5 to 20 $\mu$m. The $D_{50}$ and strontium content percentage of the obtained nitride phosphor are shown in Table 3. It is understood that when the silicon nitride powder of the present invention is used as the raw material, the x1'/x1 is large, compared with the case of using other silicon nitride powders as the raw material. In the case where the silicon nitride powder having a high reactivity of the present invention is used as the raw material, since solid solution of strontium into the nitride phosphor, particularly, into the CaSiAlN$_3$ crystal lattice, is promoted, the residual percentage of strontium in the nitride phosphor is high and in turn, the composition control is facilitate.

In addition, the fluorescence properties of the obtained nitride phosphor were evaluated by the same method as in Example 21. The fluorescence properties of each of the nitride phosphors according to Examples 22 to 38 and Comparative Examples 21 to 23 and 25 to 30 are shown in Table 3.

It is understood from Table 3 that in Examples 21 to 38 where the specific surface area of the silicon nitride powder is from 5 to 35 m$^2$/g, FS/FSO (m$^2$/g)/(mass%)) is from 8 to 53 and FS/FIO ((m$^2$/g)/(mass%) is 20 or more, the relative fluorescence intensity and external quantum efficiency are increased.

(Comparative Examples 31 to 36)

As shown in Table 3, even when the design composition is the same, the residual percentage of strontium in the nitride phosphor differs among the silicon nitride powders and in turn, the obtained nitride phosphors differ in the strontium content percentage. By taking into account the residual percentage of strontium in the nitride phosphor using each silicon nitride powder, the strontium percentage in the raw material or the firing temperature were adjusted to afford substantially the same strontium content ratio to the obtained nitride phosphors. In this state, the fluorescent properties were compared.

The nitride phosphors of Comparative Examples 31 to 36 were produced in the same manner as in Example 21 except that the silicon nitride powder shown in Table 4 was used and the strontium content percentage was made substantially the same as that of the nitride phosphor of Example 21 by formulating the design composition to become the composition formula shown in Table 4 in Comparative Examples 31 to 35 or producing the nitride phosphor under the firing conditions shown in Table 4 in Comparative Example 36. As seen in Table 5, the strontium content percentage of the obtained nitride phosphors of Comparative Examples 31 to 36 was confirmed to be substantially the same as that of the nitride phosphor of Example 21.

The fluorescence properties of each of the obtained nitride phosphors of Comparative Examples 31 to 36 were evaluated by the same method as in Example 21. The results are shown in Table 5, and in the nitride phosphors of Comparative Examples 31 to 36, the strontium content percentage was substantially the same as that of the nitride phosphor of Example 21, but in Comparative Examples 31 to 36 where a silicon nitride powder different from the present invention was used as the raw material, both the relative fluorescence intensity and the external quantum efficiency showed a smaller value, compared with the nitride phosphor of Example 21.

(Comparative Examples 37 to 42)

The nitride phosphors of Comparative Examples 37 to 42 were produced in the same manner as in Example 24 except that the silicon nitride powder shown in Table 4 was used and the strontium content percentage was made substantially the same as that of the nitride phosphor of Example 24 by formulating the design composition to become the composition formula shown in Table 4 in Comparative Examples 37 to 41 or producing the nitride phosphor under the firing conditions shown in Table 4 in Comparative Example 42. As seen in Table 5, the strontium content percentage of the obtained nitride phosphors of Comparative Examples 37 to 42 was confirmed to be substantially the same as that of the nitride phosphor of Example 24.

The fluorescence properties of each of the obtained nitride phosphors of Comparative Examples 37 to 42 were evaluated by the same method as in Example 24. The results are shown in Table 5, and in the nitride phosphors of Comparative Examples 37 to 42, the strontium content percentage was substantially the same as that of the nitride phosphor of Example 24, but in Comparative Examples 37 to 42 where a silicon nitride powder different from the present invention was used as the raw material, both the relative fluorescence intensity and the external quantum efficiency showed a smaller value, compared with the nitride phosphor of Example 24.

(Example 41 and Comparative Examples 43 to 48)

The nitride phosphor of Example 41 was produced in the same manner as in Example 21 except that the design composition was formulated to become the composition formula shown in Table 4 by using the silicon nitride powder shown in Table 4. In addition, the nitride phosphors of Comparative Examples 43 to 48 were produced in the same manner as in Example 41 except that the silicon nitride powder shown in Table 4 was used and the strontium content percentage was made substantially the same as that of the nitride phosphor of Example 41 by formulating the design composition to become the composition formula shown in Table 4 in Comparative Examples 43 to 47 or producing the nitride phosphor under the firing conditions shown in Table 4 in Comparative Example 48. As seen in Table 5, the strontium content percentage of the obtained nitride phosphors of Comparative Examples 43 to 48 was confirmed to be substantially the same as that of the nitride phosphor of Example 41.

The fluorescence properties of each of the obtained nitride phosphors of Example 41 and Comparative Examples 43 to 48 were evaluated by the same method as in Example 21. The results are shown in Table 5, and in Example 41 using the silicon nitride powder of the present invention as the raw material, both the relative fluorescence intensity and the external quantum efficiency showed a larger value, compared with the nitride phosphors of Comparative Examples 43 to 48 where a silicon nitride powder different from the present invention was used as the raw material and the strontium content percentage was substantially the same as that of the nitride phosphor of Example 41.

(Example 42 and Comparative Examples 49 to 54)

The nitride phosphor of Example 42 was produced in the same manner as in Example 21 except that the design composition was formulated to become the composition formula shown in Table 4 by using the silicon nitride powder shown in Table 4. In addition, the nitride phosphors of Comparative Examples 49 to 54 were produced in the same manner as in Example 42 except that the silicon nitride powder shown in Table 4 was used and the strontium content percentage was made substantially the same as that of the nitride phosphor of Example 42 by formulating the design composition to become the composition formula shown in Table 4 in Comparative Examples 49 to 53 or producing the nitride phosphor under the firing conditions shown in Table 4 in Comparative Example 54. As seen in Table 5, the strontium content percentage of the obtained nitride phosphors of Comparative Examples 49 to 54 was confirmed to be substantially the same as that of the nitride phosphor of Example 42.

The fluorescence properties of each of the obtained nitride phosphors of Example 42 and Comparative Examples 49 to 54 were evaluated by the same method as in Example 21. The results are shown in Table 5, and in Example 42 using the silicon nitride powder of the present invention as the raw material, both the relative fluorescence intensity and the external quantum efficiency showed a larger value, compared with the nitride phosphors of Comparative Examples 49 to 54 where a silicon nitride powder different from the present invention was used as the raw material and the strontium content percentage was substantially the same as that of the nitride phosphor of Example 42.

(Example 43 and Comparative Examples 55 to 60)

The nitride phosphor of Example 43 was produced in the same manner as in Example 21 except that the design composition was formulated to become the composition formula shown in Table 4 by using the silicon nitride powder shown in Table 4. In addition, the nitride phosphors of Comparative Examples 55 to 60 were produced in the same manner as in Example 43 except that the silicon nitride powder shown in Table 4 was used and the strontium content percentage was made substantially the same as that of the nitride phosphor of Example 43 by formulating the design composition to become the composition formula shown in Table 4 in Comparative Examples 55 to 59 or producing the nitride phosphor under the firing conditions shown in Table 4 in Comparative Example 60. As seen in Table 5, the strontium content percentage of the obtained nitride phosphors of Comparative Examples 55 to 60 was confirmed to be substantially the same as that of the nitride phosphor of Example 43.

The fluorescence properties of each of the obtained nitride phosphors of Example 43 and Comparative Examples 55 to 60 were evaluated by the same method as in Example 21. The results are shown in Table 5, and in Example 43 using the silicon nitride powder of the present invention as the raw material, both the relative fluorescence intensity and the external quantum efficiency showed a larger value, compared with the nitride phosphors of Comparative Examples 55 to 60 where a silicon nitride powder different from the present invention was used as the raw material and the strontium content percentage was substantially the same as that of the nitride phosphor of Example 43.

(Example 44 and Comparative Examples 61 to 66)

The nitride phosphor of Example 44 was produced in the same manner as in Example 21 except that the design composition was formulated to become the composition formula shown in Table 4 by using the silicon nitride powder shown in Table 4. In addition, the nitride phosphors of Comparative Examples 61 to 66 were produced in the same manner as in Example 44 except that the silicon nitride powder shown in Table 4 was used and the strontium content percentage was made substantially the same as that of the nitride phosphor of Example 44 by formulating the design composition to become the composition formula shown in Table 4 in Comparative Examples 61 to 65 or producing the nitride phosphor under the firing conditions shown in Table 4 in Comparative Example 66. As seen in Table 5, the strontium content percentage of the obtained nitride phosphors of Comparative Examples 61 to 66 was confirmed to be substantially the same as that of the nitride phosphor of Example 44.

The fluorescence properties of each of the obtained nitride phosphors of Example 44 and Comparative Examples 61 to 66 were evaluated by the same method as in Example 21. The results are shown in Table 5, and in Example 44 using the silicon nitride powder of the present invention as the raw material, both the relative fluorescence intensity and the external quantum efficiency showed a larger value, compared with the nitride phosphors of Comparative Examples 61 to 66 where a silicon nitride powder different from the present invention was used as the raw material and the strontium content percentage was substantially the same as that of the nitride phosphor of Example 44.

(Example 45 and Comparative Examples 67 to 72)

The nitride phosphor of Example 45 was produced in the same manner as in Example 21 except that the design composition was formulated to become the composition formula shown in Table 4 by using the silicon nitride powder shown in Table 4. In addition, the nitride phosphors of Comparative Examples 67 to 72 were produced in the same manner as in Example 45 except that the silicon nitride powder shown in Table 4 was used and the strontium content percentage was made substantially the same as that of the nitride phosphor of Example 45 by formulating the design composition to become the composition formula shown in Table 4 in Comparative Examples 67 to 71 or producing the nitride phosphor under the firing conditions shown in Table 4 in Comparative Example 72. As seen in Table 5, the strontium content percentage of the obtained nitride phosphors of Comparative Examples 67 to 72 was confirmed to be substantially the same as that of the nitride phosphor of Example 45.

The fluorescence properties of each of the obtained nitride phosphors of Example 45 and Comparative Examples 67 to 72 were evaluated by the same method as in Example 21. The results are shown in Table 5, and in Example 45 using the silicon nitride powder of the present invention as the raw material, both the relative fluorescence intensity and the external quantum efficiency showed a larger value, compared with the nitride phosphors of Comparative Examples 67 to 72 where a silicon nitride powder different from the present invention was used as the raw material and the strontium content percentage was substantially the same as that of the nitride phosphor of Example 45.

(Example 46 and Comparative Examples 73 to 78)

The nitride phosphor of Example 46 was produced in the same manner as in Example 21 except that the design composition was formulated to become the composition formula shown in Table 4 by using the silicon nitride powder shown in Table 4. In addition, the nitride phosphors of Comparative Examples 73 to 78 were produced in the same manner as in Example 46 except that the silicon nitride powder shown in Table 4 was used and the strontium content percentage was made substantially the same as that of the nitride phosphor of Example 46 by formulating the design composition to become the composition formula shown in Table 4 in Comparative Examples 73 to 77 or producing the nitride phosphor under the firing conditions shown in Table 4 in Comparative Example 78. As seen in Table 5, the strontium content percentage of the obtained nitride phosphors of Comparative Examples 73 to 78 was confirmed to be substantially the same as that of the nitride phosphor of Example 46.

The fluorescence properties of each of the obtained nitride phosphors of Example 46 and Comparative Examples 73 to 78 were evaluated by the same method as in Example 21. The results are shown in Table 5, and in Example 46 using the silicon nitride powder of the present invention as the raw material, both the relative fluorescence intensity and the external quantum efficiency showed a larger value, compared with the nitride phosphors of Comparative Examples 73 to 78 where a silicon nitride powder different from the present invention was used as the raw material and the strontium content percentage was substantially the same as that of the nitride phosphor of Example 46.

(Examples 51 to 67 and Comparative Examples 79 to 89)

The nitride phosphors of Examples 51 to 78 were produced in the same manner as in Example 21 except for formulating the design composition to become the composition formula shown in Table 6.

The fluorescence properties of each of the obtained nitride phosphors of Examples 51 to 67 and Comparative Examples 79 to 89 were evaluated by the same method as in Example 21. The results are shown in Table 7, and it was confirmed that the nitride phosphor using the silicon nitride powder of the present invention as the raw material exhibits a high relative fluorescence intensity and a high external quantum efficiency over a wide composition range.

On the other hand, it was confirmed that in the nitride phosphor where x1 is smaller, that is, the strontium content is smaller, than in the design composition of the nitride phosphor of the present invention, the fluorescence peak wavelength is longer than 646 nm and in the nitride phosphor where the constituent elements except for strontium are different from the design composition of the nitride phosphor of the present invention, the relative fluorescence intensity and the external quantum efficiency remain confined to a small value.

It is understood that in the nitride phosphor produced using the silicon nitride powder of the present invention, when x1, x2, a, b and c in composition formula (1):

$$(Ca_{1-x1-x2}Sr_{x1}Eu_{x2})_aAl_bSi_cN_{2a/3+b+4/3c}$$

are $0.49 < x1 < 1.0$, $0.0 < x2 < 0.20$, $0.9 \leq a \leq 1.1$, $0.9 \leq b \leq 1.1$ and $0.9 \leq c \leq 1.1$, the peak wavelength is from 630 to 646 nm and the relative fluorescence intensity and external quantum efficiency are large, and among others, when x1, x2, a, b and c are $0.69 < x1 < 1.0$, $0.00 < x2 \leq 0.01$, $a = 1.00$, $b = 1.00$ and $c = 1.00$, the peak wavelength is from 630 to 640 nm and the external quantum efficiency is very large as 45%.

(Examples 68 to 71)

The nitride phosphors of Examples 68 to 71 were produced by the same method as in Example 21 except that the firing temperature of the nitride phosphor was changed to the temperature shown in Table 6. The fluorescence properties of each of the obtained nitride phosphors were measured by the same method as in Example 21. The results are shown in Table 7, and it is understood that when the firing temperature is from 1,400 to 1,600°C, a nitride phosphor having a large relative fluorescence intensity and an external quantum efficiency of 47% or more is obtained.

[Table 1]

| | | Raw Material of Silicon Nitride Powder (amorphous Si-N(-H)-based compound) | | | Firing Conditions | | |
|---|---|---|---|---|---|---|---|
| | | Specific Surface Area RS [$m^2/g$] | Oxygen Content Ratio RO [mass%] | RS/RO [($m^2/g$) / (mass%)] | Firing Furnace | Firing Temperature [°C] | Temperature Rising Rate [°C/min] |
| Example | 1 | 450 | 0.73 | 616 | rotary kiln furnace | 1500 | 40 |
| | 2 | 700 | 0.41 | 1707 | | 1500 | 40 |
| | 3 | 700 | 0.70 | 1000 | | 1500 | 40 |
| | 4 | 1150 | 0.45 | 2556 | | 1500 | 40 |
| | 5 | 700 | 1.00 | 700 | | 1500 | 17 |
| | 6 | 700 | 1.00 | 700 | | 1450 | 40 |
| | 7 | 700 | 0.34 | 2059 | | 1650 | 40 |
| | 8 | 450 | 0.12 | 3750 | | 1500 | 12 |
| | 9 | 700 | 0.14 | 5000 | | 1500 | 17 |
| | 10 | 700 | 0.62 | 1129 | | 1500 | 55 |
| | 11 | 1150 | 1.80 | 639 | | 1500 | 70 |
| | 12 | 450 | 1.03 | 437 | | 1500 | 40 |
| | 13 | 480 | 1.51 | 318 | | 1500 | 40 |
| | 14 | 700 | 2.30 | 304 | | 1500 | 40 |
| | 15 | 1150 | 2.49 | 462 | | 1500 | 40 |
| | 16 | 1150 | 2.65 | 462 | | 1500 | 40 |
| | 17 | 700 | 1.00 | 700 | | 1500 | 110 |
| | 18 | 330 | 1.04 | 317 | | 1500 | 40 |
| Comparative Example | 1 | 1300 | 0.90 | 1444 | rotary kiln furnace | 1500 | 40 |
| | 2 | 1300 | 0.86 | 1512 | | 1500 | 17 |
| | 3 | 700 | 1.13 | 619 | | 1350 | 40 |
| | 4 | 700 | 1.13 | 619 | | 1750 | 40 |
| | 5 | 1150 | 2.49 | 462 | | 1500 | 130 |
| | 6 | 700 | 1.00 | 700 | | 1500 | 10 |
| | 7 | 450 | 1.03 | 437 | pusher furnace | 1500 | 1 |
| | 8 | 700 | 0.14 | 5000 | | 1500 | 1 |
| | 9 | 700 | 0.62 | 1129 | | 1500 | 1 |
| | 10 | 450 | 0.12 | 3750 | | 1500 | 0.7 |

[Table 2]

| | | Characteristics of Silicon Nitride Powder | | | | | | |
|---|---|---|---|---|---|---|---|---|
| | | Specific Surface Area FS [m²/g] | Entire Oxygen FTO [mass%] | Surface Oxygen FSO [mass%] | Internal Oxygen FIO [mass%] | FS/FSO [(m²/g)/(mass%)] | FS/FIO [(m²/g)/(mass%)] | Crystallization Degree [%] |
| Example | 1 | 21.6 | 1.40 | 0.88 | 0.52 | 24.5 | 41.5 | 100 |
| | 2 | 14.5 | 1.23 | 0.75 | 0.48 | 19.4 | 30.1 | 100 |
| | 3 | 16.9 | 1.45 | 0.88 | 0.57 | 19.2 | 29.6 | 100 |
| | 4 | 10.4 | 1.05 | 0.71 | 0.34 | 14.6 | 30.9 | 100 |
| | 5 | 12.8 | 1.22 | 0.79 | 0.43 | 16.2 | 29.8 | 100 |
| | 6 | 16.4 | 1.29 | 0.77 | 0.52 | 21.3 | 31.5 | 100 |
| | 7 | 13.2 | 1.21 | 0.73 | 0.48 | 18.0 | 27.7 | 100 |
| | 8 | 5.6 | 0.86 | 0.62 | 0.24 | 9.0 | 23.3 | 100 |
| | 9 | 6.4 | 0.98 | 0.70 | 0.28 | 9.1 | 22.9 | 100 |
| | 10 | 19.8 | 1.37 | 0.87 | 0.50 | 22.8 | 39.6 | 100 |
| | 11 | 28.9 | 1.59 | 1.18 | 0.41 | 24.5 | 71.2 | 100 |
| | 12 | 23.3 | 1.87 | 0.73 | 1.14 | 31.9 | 20.4 | 100 |
| | 13 | 27.7 | 2.08 | 0.76 | 1.32 | 36.4 | 21.0 | 100 |
| | 14 | 34.8 | 2.66 | 1.04 | 1.62 | 33.5 | 21.5 | 100 |
| | 15 | 33.6 | 2.75 | 1.08 | 1. 67 | 31.1 | 20.1 | 100 |
| | 16 | 31.6 | 2.85 | 1.42 | 1.43 | 22.3 | 22.1 | 100 |
| | 17 | 33.4 | 1.31 | 0.64 | 0.67 | 52.2 | 49.9 | 100 |
| | 18 | 23.8 | 1.45 | 0.90 | 0.55 | 26.4 | 43.3 | 100 |
| Comparative Example | 1 | 9.8 | 0.88 | 0.36 | 0.52 | 27.2 | 18.8 | 100 |
| | 2 | 8.3 | 0.85 | 0.37 | 0.48 | 22.4 | 17.3 | 100 |
| | 3 | 42.3 | 2.20 | 1.30 | 0.90 | 32.6 | 47.2 | 70 |
| | 4 | 13.1 | 0.99 | 0.49 | 0.50 | 27.0 | 26.0 | 100 |
| | 5 | 38.8 | 2.74 | 0.71 | 2.03 | 54.6 | 19.1 | 100 |
| | 6 | 8.1 | 1.27 | 0.77 | 0.50 | 10.5 | 16.2 | 100 |
| | 7 | 9.2 | 1.85 | 0.83 | 1.02 | 11.1 | 9.0 | 100 |
| | 8 | 3.1 | 1.03 | 0.72 | 0.31 | 4.3 | 10.0 | 100 |
| | 9 | 4.1 | 1.40 | 0.71 | 0.69 | 5.8 | 5.9 | 100 |
| | 10 | 0.3 | 0.35 | 0.21 | 0.14 | 1.4 | 2.1 | 100 |

[Table 3]

| | | $D_{50}$ [μm] | Strontium Content Percentage x1' | x1'/x1 [%] | Fluorescence Properties | | | | |
|---|---|---|---|---|---|---|---|---|---|
| | | | | | Peak Wavelength [nm] | Relative Fluorescence Intensity [%] | Absorptivity [%] | External Quantum Efficiency [%] | Internal Quantum Efficiency [%] |
| Example | 21 | 13.1 | 0.762 | 96.0 | 633.0 | 149 | 70.7 | 49.8 | 70.5 |
| | 22 | 14.3 | 0.728 | 91.8 | 633.5 | 136 | 68.7 | 45.0 | 65.4 |
| | 23 | 14.2 | 0.740 | 93.2 | 633.5 | 138 | 69.8 | 46.1 | 66.1 |
| | 24 | 13.8 | 0.704 | 88.7 | 634.0 | 138 | 68.5 | 45.4 | 66.2 |
| | 25 | 14.2 | 0.720 | 90.7 | 633.5 | 140 | 68.8 | 46.1 | 67.0 |
| | 26 | 14 | 0.737 | 92.9 | 633.5 | 141 | 69.4 | 46.8 | 67.4 |
| | 27 | 14.2 | 0.722 | 91.0 | 633.5 | 144 | 69.3 | 47.5 | 68.5 |
| | 28 | 16.6 | 0.671 | 84.6 | 634.0 | 132 | 68.2 | 43.8 | 64.2 |
| | 29 | 17.3 | 0.688 | 86.8 | 634.0 | 131 | 68.5 | 43.5 | 63.5 |
| | 30 | 13.3 | 0.754 | 95.0 | 633.5 | 147 | 69.9 | 48.7 | 69.7 |
| | 31 | 12.9 | 0.771 | 97.2 | 633.0 | 148 | 71.3 | 50.0 | 70.1 |
| | 32 | 11.4 | 0.744 | 93.8 | 633.0 | 142 | 68.8 | 46.7 | 67.9 |
| | 33 | 10.8 | 0.748 | 94.2 | 633.0 | 141 | 69.0 | 46.5 | 67.4 |
| | 34 | 12.1 | 0.764 | 96.3 | 633.0 | 147 | 69.5 | 47.7 | 68.6 |
| | 35 | 12.1 | 0.754 | 95.0 | 633.0 | 146 | 69.3 | 47.3 | 68.2 |
| | 36 | 13.5 | 0.738 | 93.0 | 633.5 | 144 | 68.7 | 47.1 | 68.6 |
| | 37 | 10.6 | 0.750 | 94.5 | 633.0 | 146 | 67.2 | 45.8 | 68.2 |
| | 38 | 13.1 | 0.757 | 95.4 | 633.5 | 138 | 70.5 | 46.5 | 66.0 |

EP 2 966 148 A1

(continued)

| | D$_{50}$ [μm] | Strontium Content Percentage x1' | x1'/x1 [%] | Fluorescence Properties | | | | |
| | | | | Peak Wavelength [nm] | Relative Fluorescence Intensity [%] | Absorptivity [%] | External Quantum Efficiency [%] | Internal Quantum Efficiency [%] |
|---|---|---|---|---|---|---|---|---|
| 21 | 13.9 | 0.655 | 82.5 | 634.0 | 120 | 68.3 | 39.9 | 58.4 |
| 22 | 13.4 | 0.648 | 81.7 | 634.0 | 118 | 68.6 | 40.1 | 58.4 |
| 23 | 12.3 | 0.679 | 85.6 | 632.0 | 123 | 69.9 | 41.9 | 60.0 |
| 25 | 10.9 | 0.744 | 93.8 | 632.5 | 127 | 66.7 | 41.8 | 62.7 |
| 26 | 13.1 | 0.647 | 81.5 | 633.5 | 124 | 68.3 | 41.3 | 60.5 |
| 27 | 13.9 | 0.652 | 82.2 | 634.0 | 125 | 68.3 | 41.5 | 60.8 |
| 28 (Comparative Example) | 16.8 | 0.622 | 78.4 | 634.5 | 116 | 67.8 | 38.3 | 56.5 |
| 29 | 16.9 | 0.627 | 79.0 | 634.5 | 118 | 68.0 | 39.0 | 57.4 |
| 30 | 18.2 | 0.587 | 74.0 | 634.5 | 109 | 68.9 | 36.5 | 53.0 |

[Table 4]

| | | Raw Material Silicon Nitride Powder | Composition Formula (Design Composition) | | | | | | Firing Conditions | |
|---|---|---|---|---|---|---|---|---|---|---|
| | | | 1-x1-x2 | x1 | x2 | a | b | c | Firing Temperature [°C] | Holding Time [h] |
| | | | Ca | Sr | Eu | (Ca,Sr,Eu) | Al | Si | | |
| Example | 21 | Example 1 | 0.1984 | 0.7936 | 0.008 | 1.00 | 1.00 | 1.00 | 1500 | 6 |
| Comparative Example | 31 | Comparative Example 10 | 0.1984 | 1.0317 | 0.008 | 1.00 | 1.00 | 1.00 | 1500 | 6 |
| | 32 | Comparative Example 6 | 0.1984 | 1.0317 | 0.008 | 1.00 | 1.00 | 1.00 | 1500 | 6 |
| | 33 | Comparative Example 5 | 0.1984 | 1.0317 | 0.008 | 1.00 | 1.00 | 1.00 | 1500 | 6 |
| | 34 | Comparative Example 3 | 0.1984 | 0.9126 | 0.008 | 1.00 | 1.00 | 1.00 | 1500 | 6 |
| | 35 | Comparative Example 10 | 0.1984 | 0.7936 | 0.008 | 1.00 | 1.00 | 1.00 | 1300 | 6 |
| | 36 | Comparative Example 6 | 0.1984 | 0.7936 | 0.008 | 1.00 | 1.00 | 1.00 | 1300 | 6 |
| Example | 24 | Example 4 | 0.1984 | 0.7936 | 0.008 | 1.00 | 1.00 | 1.00 | 1500 | 6 |
| Comparative Example | 37 | Comparative Example 10 | 0.1984 | 1.0317 | 0.008 | 1.00 | 1.00 | 1.00 | 1500 | 6 |
| | 38 | Comparative Example 6 | 0.1984 | 1.0317 | 0.008 | 1.00 | 1.00 | 1.00 | 1500 | 6 |
| | 39 | Comparative Example 5 | 0.1984 | 1.0317 | 0.008 | 1.00 | 1.00 | 1.00 | 1500 | 6 |
| | 40 | Comparative Example 3 | 0.1984 | 0.9126 | 0.008 | 1.00 | 1.00 | 1.00 | 1500 | 6 |
| | 41 | Comparative Example 17 | 0.1984 | 0.7936 | 0.008 | 1.00 | 1.00 | 1.00 | 1300 | 6 |
| | 42 | Comparative Example 6 | 0.1984 | 0.7936 | 0.008 | 1.00 | 1.00 | 1.00 | 1300 | 6 |
| Example | 41 | Example 1 | 0.0992 | 0.8928 | 0.008 | 1.00 | 1.00 | 1.00 | 1500 | 6 |
| Comparative Example | 43 | Comparative Example 10 | 0.1984 | 1.1607 | 0.008 | 1.00 | 1.00 | 1.00 | 1500 | 6 |
| | 44 | Comparative Example 6 | 0.1984 | 1.1607 | 0.008 | 1.00 | 1.00 | 1.00 | 1500 | 6 |
| | 45 | Comparative Example 5 | 0.1984 | 1.1607 | 0.008 | 1.00 | 1.00 | 1.00 | 1500 | 6 |
| | 46 | Comparative Example 3 | 0.1984 | 1.0267 | 0.008 | 1.00 | 1.00 | 1.00 | 1500 | 6 |
| | 47 | Comparative Example 17 | 0.0992 | 0.8928 | 0.008 | 1.00 | 1.00 | 1.00 | 1300 | 6 |
| | 48 | Comparative Example 6 | 0.0992 | 0.8928 | 0.008 | 1.00 | 1.00 | 1.00 | 1300 | 6 |
| Example | 42 | Example 4 | 0.0992 | 0.8928 | 0.008 | 1.00 | 1.00 | 1.00 | 1500 | 6 |

(continued)

| | | Raw Material Silicon Nitride Powder | Composition Formula (Design Composition) | | | | | | Firing Conditions | |
|---|---|---|---|---|---|---|---|---|---|---|
| | | | 1-x1-x2 | x1 | x2 | a | b | c | Firing Temperature [°C] | Holding Time [h] |
| | | | Ca | Sr | Eu | (Ca,Sr,Eu) | Al | Si | | |
| Comparative Example | 49 | Comparative Example 10 | 0.0992 | 1.1607 | 0.008 | 1.00 | 1.00 | 1.00 | 1500 | 6 |
| | 50 | Comparative Example 6 | 0.0992 | 1.1607 | 0.008 | 1.00 | 1.00 | 1.00 | 1500 | 6 |
| | 51 | Comparative Example 5 | 0.0992 | 1.1607 | 0.008 | 1.00 | 1.00 | 1.00 | 1500 | 6 |
| | 52 | Comparative Example 3 | 0.0992 | 1.0267 | 0.008 | 1.00 | 1.00 | 1.00 | 1500 | 6 |
| | 53 | Comparative Example 17 | 0.0992 | 0.8928 | 0.008 | 1.00 | 1.00 | 1.00 | 1300 | 6 |
| | 54 | Comparative Example 6 | 0.0992 | 0.8928 | 0.008 | 1.00 | 1.00 | 1.00 | 1300 | 6 |
| Example | 43 | Example 1 | 0.4960 | 0.4960 | 0.008 | 1.00 | 1.00 | 1.00 | 1500 | 6 |
| Comparative Example | 55 | Comparative Example 10 | 0.4960 | 0.6448 | 0.008 | 1.00 | 1.00 | 1.00 | 1500 | 6 |
| | 56 | Comparative Example 6 | 0.4960 | 0.6448 | 0.008 | 1.00 | 1.00 | 1.00 | 1500 | 6 |
| | 57 | Comparative Example 5 | 0.4960 | 0.6448 | 0.008 | 1.00 | 1.00 | 1.00 | 1500 | 6 |
| | 58 | Comparative Example 3 | 0.4960 | 0.5704 | 0.008 | 1.00 | 1.00 | 1.00 | 1500 | 6 |
| | 59 | Comparative Example 17 | 0.4960 | 0.4960 | 0.008 | 1.00 | 1.00 | 1.00 | 1300 | 6 |
| | 60 | Comparative Example 6 | 0.4960 | 0.4960 | 0.008 | 1.00 | 1.00 | 1.00 | 1300 | 6 |
| Example | 44 | Example 4 | 0.4960 | 0.4960 | 0.008 | 1.00 | 1.00 | 1.00 | 1500 | 6 |
| Comparative Example | 61 | Comparative Example 10 | 0.4960 | 0.6448 | 0.008 | 1.00 | 1.00 | 1.00 | 1500 | 6 |
| | 62 | Comparative Example 6 | 0.4960 | 0.6448 | 0.008 | 1.00 | 1.00 | 1.00 | 1500 | 6 |
| | 63 | Comparative Example 5 | 0.4960 | 0.6448 | 0.008 | 1.00 | 1.00 | 1.00 | 1500 | 6 |
| | 64 | Comparative Example 3 | 0.4960 | 0.5704 | 0.008 | 1.00 | 1.00 | 1.00 | 1500 | 6 |
| | 65 | Comparative Example 17 | 0.4960 | 0.4960 | 0.008 | 1.00 | 1.00 | 1.00 | 1300 | 6 |
| | 66 | Comparative Example 6 | 0.4960 | 0.4960 | 0.008 | 1.00 | 1.00 | 1.00 | 1300 | 6 |
| Example | 45 | Example 1 | 0.1844 | 0.7936 | 0.022 | 1.00 | 1.00 | 1.00 | 1500 | 6 |

(continued)

| | | Raw Material Silicon Nitride Powder | Composition Formula (Design Composition) | | | | | | Firing Conditions | |
|---|---|---|---|---|---|---|---|---|---|---|
| | | | 1-x1-x2 | x1 | x2 | a | b | c | Firing Temperature [°C] | Holding Time [h] |
| | | | Ca | Sr | Eu | (Ca,Sr,Eu) | Al | Si | | |
| Comparative Example | 67 | Comparative Example 10 | 0.1984 | 1.0317 | 0.022 | 1.00 | 1.00 | 1.00 | 1500 | 6 |
| | 68 | Comparative Example 6 | 0.1984 | 1.0317 | 0.022 | 1.00 | 1.00 | 1.00 | 1500 | 6 |
| | 69 | Comparative Example 5 | 0.1984 | 1.0317 | 0.022 | 1.00 | 1.00 | 1.00 | 1500 | 6 |
| | 70 | Comparative Example 3 | 0.4960 | 0.9126 | 0.022 | 1.00 | 1.00 | 1.00 | 1500 | 6 |
| | 71 | Comparative Example 17 | 0.4960 | 0.7936 | 0.022 | 1.00 | 1.00 | 1.00 | 1300 | 6 |
| | 72 | Comparative Example 6 | 0.4960 | 0.7936 | 0.022 | 1.00 | 1.00 | 1.00 | 1300 | 6 |
| Example | 46 | Example 4 | 0.1844 | 0.7936 | 0.022 | 1.00 | 1.00 | 1.00 | 1500 | 6 |
| Comparative Example | 73 | Comparative Example 10 | 0.1984 | 1.0317 | 0.022 | 1.00 | 1.00 | 1.00 | 1500 | 6 |
| | 74 | Comparative Example 6 | 0.1984 | 1.0317 | 0.022 | 1.00 | 1.00 | 1.00 | 1500 | 6 |
| | 75 | Comparative Example 5 | 0.1984 | 1.0317 | 0.022 | 1.00 | 1.00 | 1.00 | 1500 | 6 |
| | 76 | Comparative Example 3 | 0.4960 | 0.9126 | 0.022 | 1.00 | 1.00 | 1.00 | 1500 | 6 |
| | 77 | Comparative Example 17 | 0.4960 | 0.7936 | 0.022 | 1.00 | 1.00 | 1.00 | 1300 | 6 |
| | 78 | Comparative Example 6 | 0.4960 | 0.7936 | 0.022 | 1.00 | 1.00 | 1.00 | 1300 | 6 |

EP 2 966 148 A1

[Table 5]

| | | Strontium Content Percentage x1' | x1'-x1 [%] | Fluorescence Properties | | | | |
|---|---|---|---|---|---|---|---|---|
| | | | | Peak Wavelength [nm] | Relative Fluorescence Intensity [%] | Absorptivity [%] | External Quantum Efficiency [%] | Internal Quantum Efficiency [%] |
| Example | 21 | 0.762 | 96.0 | 633.0 | 149 | 70.7 | 49.8 | 70.5 |
| Comparative Example | 31 | 0.757 | 73.4 | 633.5 | 93 | 70.3 | 34.3 | 48.8 |
| | 32 | 0.778 | 75.4 | 632.0 | 111 | 66.2 | 36.9 | 55.7 |
| | 33 | 0.749 | 72.6 | 631.5 | 108 | 62.9 | 34.3 | 54.6 |
| | 34 | 0.752 | 82.5 | 633.5 | 108 | 66.7 | 36.1 | 54.1 |
| | 35 | 0.756 | 95.2 | 634.5 | 89 | 66.7 | 30.5 | 45.8 |
| | 36 | 0.770 | 97.0 | 633.5 | 107 | 65.3 | 34.8 | 53.3 |
| Example | 24 | 0.704 | 88.7 | 634.0 | 138 | 68.5 | 45.4 | 66.2 |
| Comparative Example | 37 | 0.711 | 68.9 | 634.5 | 87 | 68.3 | 31.7 | 46.4 |
| | 38 | 0.715 | 69.3 | 633.0 | 104 | 64.4 | 33.5 | 52.0 |
| | 39 | 0.699 | 67.8 | 632.5 | 101 | 61.2 | 31.7 | 51.8 |
| | 40 | 0.708 | 77.6 | 634.5 | 101 | 64.9 | 33.9 | 52.2 |
| | 41 | 0.718 | 90.5 | 635.5 | 83 | 64.9 | 29.1 | 44.9 |
| | 42 | 0.719 | 90.6 | 634.5 | 100 | 63.5 | 32.6 | 51.4 |
| Example | 41 | 0.835 | 93.5 | 631.0 | 143 | 72.3 | 49.3 | 68.2 |
| Comparative Example | 43 | 0.851 | 73.3 | 631.5 | 84 | 66.9 | 30.3 | 45.3 |
| | 44 | 0.845 | 72.8 | 630.5 | 93 | 69.2 | 33.6 | 48.5 |
| | 45 | 0.829 | 71.4 | 630.0 | 98 | 67.3 | 34.1 | 50.7 |
| | 46 | 0.833 | 71.8 | 631.5 | 99 | 70.0 | 35.7 | 51.1 |
| | 47 | 0.841 | 94.2 | 631.5 | 74 | 64.2 | 26.5 | 41.3 |
| | 48 | 0.852 | 95.4 | 632.0 | 91 | 68.1 | 32.8 | 48.1 |
| Example | 42 | 0.785 | 87.9 | 632.5 | 127 | 71.4 | 45.1 | 63.1 |

(continued)

| | | Strontium Content Percentage x1' | x1'-x1 [%] | Fluorescence Properties | | | | |
|---|---|---|---|---|---|---|---|---|
| | | | | Peak Wavelength [nm] | Relative Fluorescence Intensity [%] | Absorptivity [%] | External Quantum Efficiency [%] | Internal Quantum Efficiency [%] |
| Comparative Example | 49 | 0.779 | 67.1 | 633.5 | 72 | 71.1 | 30.2 | 42.5 |
| | 50 | 0.792 | 68.2 | 631.5 | 86 | 67.0 | 31.2 | 46.5 |
| | 51 | 0.776 | 66.9 | 631.0 | 84 | 63.6 | 28.8 | 45.2 |
| | 52 | 0.782 | 76.2 | 632.5 | 83 | 67.5 | 30.3 | 44.8 |
| | 53 | 0.793 | 88.8 | 634.0 | 68 | 67.5 | 26.4 | 39.1 |
| | 54 | 0.795 | 89.0 | 633.0 | 85 | 68.1 | 30.9 | 45.4 |
| Example | 43 | 0.479 | 96.6 | 644.5 | 149 | 73.2 | 51.6 | 70.5 |
| Comparative Example | 55 | 0.463 | 71.8 | 653.0 | 121 | 64.9 | 38.3 | 59.0 |
| | 56 | 0.480 | 74.4 | 652.5 | 127 | 64.9 | 40.4 | 62.2 |
| | 57 | 0.469 | 72.7 | 653.5 | 126 | 63.1 | 38.8 | 61.6 |
| | 58 | 0.473 | 82.9 | 654.0 | 125 | 66.5 | 40.7 | 61.2 |
| | 59 | 0.481 | 97.0 | 656.0 | 115 | 63.9 | 36.6 | 57.3 |
| | 60 | 0.485 | 97.8 | 654.0 | 121 | 64.2 | 37.6 | 58.6 |
| Example | 44 | 0.444 | 89.5 | 645.5 | 143 | 69.2 | 47.2 | 68.2 |
| Comparative Example | 61 | 0.423 | 65.6 | 646.0 | 103 | 68.7 | 36.1 | 52.5 |
| | 62 | 0.456 | 70.7 | 644.5 | 120 | 64.7 | 37.9 | 58.5 |
| | 63 | 0.429 | 66.5 | 644.0 | 120 | 61.5 | 36.4 | 59.2 |
| | 64 | 0.449 | 78.7 | 646.0 | 119 | 65.2 | 38.4 | 58.8 |
| | 65 | 0.457 | 92.1 | 647.0 | 102 | 65.2 | 33.6 | 51.5 |
| | 66 | 0.451 | 90.9 | 646.0 | 116 | 63.8 | 36.9 | 57.8 |
| Example | 45 | 0.769 | 96.9 | 637.5 | 116 | 71.8 | 41.4 | 57.7 |

(continued)

| | | Strontium Content Percentage x1' | x1'-x1 [%] | Fluorescence Properties | | | | |
|---|---|---|---|---|---|---|---|---|
| | | | | Peak Wavelength [nm] | Relative Fluorescence Intensity [%] | Absorptivity [%] | External Quantum Efficiency [%] | Internal Quantum Efficiency [%] |
| Comparative Example | 67 | 0.752 | 72.9 | 638.5 | 65 | 69.3 | 26.2 | 37.8 |
| | 68 | 0.771 | 74.7 | 636.5 | 79 | 67.2 | 29.0 | 43.1 |
| | 69 | 0.751 | 72.8 | 636.0 | 76 | 64.9 | 27.3 | 42.1 |
| | 70 | 0.760 | 83.3 | 638.0 | 75 | 64.7 | 27.0 | 41.7 |
| | 71 | 0.762 | 96.0 | 638.5 | 62 | 65.7 | 24.2 | 36.8 |
| | 72 | 0.773 | 97.4 | 637.5 | 78 | 67.3 | 28.8 | 42.8 |
| Example | 46 | 0.769 | 96.9 | 639.0 | 113 | 71.4 | 40.3 | 56.5 |
| Comparative Example | 73 | 0.773 | 74.9 | 638.5 | 67 | 68.9 | 27.2 | 39.5 |
| | 74 | 0.780 | 75.6 | 640.0 | 77 | 68.1 | 29.5 | 43.3 |
| | 75 | 0.757 | 73.4 | 640.5 | 78 | 66.6 | 28.6 | 42.9 |
| | 76 | 0.754 | 82.6 | 638.5 | 77 | 65.9 | 28.0 | 42.5 |
| | 77 | 0.764 | 96.3 | 637.5 | 63 | 65.3 | 24.6 | 37.6 |
| | 78 | 0.779 | 98.2 | 638.5 | 76 | 67.2 | 29.0 | 43.2 |

[Table 6]

| | | Composition Formula (Design Composition) | | | | | | Firing Conditions | |
|---|---|---|---|---|---|---|---|---|---|
| | | | x1 | x2 | a | b | c | Firing Temperature [°C] | Holding Time [h] |
| | | Ca | Sr | Eu | (Ca, Sr, Eu) | Al | Si | | |
| Example | 51 | 0.2976 | 0.6944 | 0.008 | 1.00 | 1.00 | 1.00 | 1500 | 6 |
| | 52 | 0.3968 | 0.5952 | 0.008 | 1.00 | 1.00 | 1.00 | 1500 | 6 |
| | 53 | 0.2004 | 0.7936 | 0.006 | 1.00 | 1.00 | 1.00 | 1500 | 6 |
| | 54 | 0.1964 | 0.7936 | 0.010 | 1.00 | 1.00 | 1.00 | 1500 | 6 |
| | 55 | 0.1904 | 0.7936 | 0.016 | 1.00 | 1.00 | 1.00 | 1500 | 6 |
| | 56 | 0.1984 | 0.7936 | 0.008 | 0.95 | 1.00 | 1.00 | 1500 | 6 |
| | 57 | 0.1984 | 0.7936 | 0.008 | 0.90 | 1.00 | 1.00 | 1500 | 6 |
| | 58 | 0.1984 | 0.7936 | 0.008 | 1.05 | 1.00 | 1.00 | 1500 | 6 |
| | 59 | 0.1984 | 0.7936 | 0.008 | 1.10 | 1.00 | 1.00 | 1500 | 6 |
| | 60 | 0.1984 | 0.7936 | 0.008 | 1.00 | 0.95 | 1.00 | 1500 | 6 |
| | 61 | 0.1984 | 0.7936 | 0.008 | 1.00 | 0.90 | 1.00 | 1500 | 6 |
| | 62 | 0.1984 | 0.7936 | 0.008 | 1.00 | 1.05 | 1.00 | 1500 | 6 |
| | 63 | 0.1984 | 0.7936 | 0.008 | 1.00 | 1.10 | 1.00 | 1500 | 6 |
| | 64 | 0.1984 | 0.7936 | 0.008 | 1.00 | 1.00 | 0.95 | 1500 | 6 |
| | 65 | 0.1984 | 0.7936 | 0.008 | 1.00 | 1.00 | 0.90 | 1500 | 6 |
| | 66 | 0.1984 | 0.7936 | 0.008 | 1.00 | 1.00 | 1.05 | 1500 | 6 |
| | 67 | 0.1984 | 0.7936 | 0.008 | 1.00 | 1.00 | 1.10 | 1500 | 6 |
| | 68 | 0.1984 | 0.7936 | 0.008 | 1.00 | 1.00 | 1.00 | 1300 | 6 |
| | 69 | 0.1984 | 0.7936 | 0.008 | 1.00 | 1.00 | 1.00 | 1400 | 6 |
| | 70 | 0.1984 | 0.7936 | 0.008 | 1.00 | 1.00 | 1.00 | 1600 | 6 |
| | 71 | 0.1984 | 0.7936 | 0.008 | 1.00 | 1.00 | 1.00 | 1700 | 6 |
| Comparative Example | 79 | 0.5456 | 0.4464 | 0.008 | 1.00 | 1.00 | 1.00 | 1500 | 6 |
| | 80 | 0.5952 | 0.3968 | 0.008 | 1.00 | 1.00 | 1.00 | 1500 | 6 |
| | 81 | 0.7936 | 0.1984 | 0.008 | 1.00 | 1.00 | 1.00 | 1500 | 6 |
| | 82 | 0.1864 | 0.7936 | 0.020 | 1.00 | 1.00 | 1.00 | 1500 | 6 |
| | 83 | 0.1844 | 0.7936 | 0.022 | 1.00 | 1.00 | 1.00 | 1500 | 6 |
| | 84 | 0.1984 | 0.7936 | 0.008 | 0.85 | 1.00 | 1.00 | 1500 | 6 |
| | 85 | 0.1984 | 0.7936 | 0.008 | 1.15 | 1.00 | 1.00 | 1500 | 6 |
| | 86 | 0.1984 | 0.7936 | 0.008 | 1.00 | 0.85 | 1.00 | 1500 | 6 |
| | 87 | 0.1984 | 0.7936 | 0.008 | 1.00 | 1.15 | 1.00 | 1500 | 6 |
| | 88 | 0.1984 | 0.7936 | 0.008 | 1.00 | 1.00 | 0.85 | 1500 | 6 |
| | 89 | 0.1984 | 0.7936 | 0.008 | 1.00 | 1.00 | 1.15 | 1500 | 6 |

[Table 7]

| | | Fluorescence Properties | | | | |
|---|---|---|---|---|---|---|
| | | Peak Wavelength [nm] | Relative Fluorescence Intensity [%] | Absorptivity [%] | External Quantum Efficiency [%] | Internal Quantum Efficiency [%] |
| Example | 51 | 637.0 | 147 | 69.7 | 48.6 | 69.7 |
| | 52 | 641.0 | 140 | 70.1 | 47.0 | 67.0 |
| | 53 | 633.0 | 136 | 65.4 | 46.6 | 71.2 |
| | 54 | 633.5 | 134 | 71.0 | 46.4 | 65.3 |
| | 55 | 635.0 | 126 | 72.4 | 45.0 | 62.1 |
| | 56 | 633.0 | 143 | 70.1 | 47.8 | 68.2 |
| | 57 | 632.5 | 139 | 69.5 | 46.3 | 66.6 |
| | 58 | 633.5 | 144 | 70.3 | 48.2 | 68.5 |
| | 59 | 633.5 | 141 | 71.1 | 47.9 | 67.4 |
| | 60 | 633.5 | 144 | 71.1 | 48.7 | 68.5 |
| | 61 | 633.5 | 137 | 71.5 | 47.1 | 65.8 |
| | 62 | 632.5 | 135 | 69.8 | 45.4 | 65.0 |
| | 63 | 632.0 | 129 | 67.5 | 42.3 | 62.7 |
| | 64 | 633.5 | 137 | 70.6 | 46.5 | 65.8 |
| | 65 | 633.5 | 132 | 71.0 | 45.4 | 63.9 |
| | 66 | 632.5 | 139 | 69.4 | 46.2 | 66.6 |
| | 67 | 632.0 | 129 | 66.5 | 41.7 | 62.7 |
| | 68 | 633.0 | 121 | 63.4 | 41.4 | 65.3 |
| | 69 | 633.5 | 138 | 70.2 | 47.8 | 68.1 |
| | 70 | 632.5 | 136 | 69.7 | 48.2 | 69.2 |
| | 71 | 632.0 | 122 | 65.5 | 41.7 | 63.7 |
| Comparative Example | 79 | 654.5 | 147 | 72.8 | 50.7 | 69.7 |
| | 80 | 655.0 | 153 | 74.5 | 53.7 | 72.0 |
| | 81 | 656.5 | 155 | 75.3 | 54.8 | 72.8 |
| | 82 | 636.5 | 114 | 72.5 | 39.4 | 54.3 |
| | 83 | 637.5 | 116 | 71.8 | 39.8 | 55.5 |
| | 84 | 633.0 | 111 | 63.9 | 35.6 | 55.7 |
| | 85 | 634.5 | 114 | 71.7 | 39.9 | 55.6 |
| | 86 | 633.0 | 107 | 71.2 | 38.6 | 54.2 |
| | 87 | 634.0 | 112 | 67.3 | 37.8 | 56.1 |
| | 88 | 632.5 | 113 | 70.7 | 39.9 | 56.5 |
| | 89 | 634.5 | 109 | 66.3 | 36.4 | 54.9 |

**Claims**

1. A method for producing a nitride phosphor, comprising:

mixing a calcium source substance, a strontium source substance, a europium source substance, an aluminum source substance, and a silicon nitride powder in which the specific surface area is from 5 to 35 m$^2$/g and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS (m$^2$/g), FS/FSO ((m$^2$/g)/(mass%)) is from 8 to 53 and FS/FIO ((m$^2$/g)/(mass%)) is 20 or more, to satisfy the ratio of constituent elements except for nitrogen in a composition represented by composition formula (1) :

$$(Ca_{1-x1-x2}Sr_{x1}Eu_{x2})_aAl_bSi_cN_{2a/3+b+4/3c} \qquad (1)$$

(wherein 0.49<x1<1.0, 0.0<x2<0.02, 0.9≤a≤1.1, 0.9≤b≤1.1, and 0.9≤c≤1.1), and
firing the mixture.

2. The method for producing a nitride phosphor according to claim 1, wherein said x1 and x2 are 0.69<x1<1.00 and 0.00<x2<0.01.

3. The method for producing a nitride phosphor according to claim 2, wherein said a, b and c are a=1, b=1 and c=1.

4. The method for producing a nitride phosphor according to any one of claims 1 to 3, wherein the nitride phosphor is a composition represented by composition formula (1'):

$$(Ca_{1-x1'-x2'},Sr_{x1'},Eu_{x2'})_{a'}Al_{b'}Si_{c'}N_{2a'/3+b'+4/3c'} \qquad (1')$$

(wherein 0.49<x1'<1.0, 0.0<x2'<0.02, 0.9≤a'≤1.1, 0.9<b'≤1.1, and 0.9≤c'≤1.1).

5. The method for producing a nitride phosphor according to claim 4, wherein said x1' and x2' are 0.69<x1'<1.00 and 0.00<x2'<0.01.

6. The method for producing a nitride phosphor according to claim 5, wherein said a', b' and c' are a'=1, b'=1 and c'=1.

7. The method for producing a nitride phosphor according to any one of claims 4 to 6, wherein the ratio x1'/x1 is 0.9 or more.

8. The method for producing a nitride phosphor according to claim 7, wherein the ratio x1'/x1 is 0.94 or more.

9. A silicon nitride powder for a nitride phosphor, wherein the specific surface area is from 5 to 35 m$^2$/g and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS (m$^2$/g), FS/FSO ((m$^2$/g)/(mass%)) is from 8 to 53 and FS/FIO ((m$^2$/g)/(mass%)) is 20 or more.

10. A nitride phosphor obtained by mixing a calcium source substance, a strontium source substance, a europium source substance, an aluminum source substance, and a silicon nitride powder in which the specific surface area is from 5 to 35 m$^2$/g and assuming that the content ratio of oxygen existing in a region from the particle surface to 3 nm beneath the particle surface is FSO (mass%), the content ratio of oxygen existing in a more inward side than 3 nm beneath the particle surface is FIO (mass%), and the specific surface area is FS (m$^2$/g), FS/FSO is from 8 to 53 and FS/FIO is 20 or more, to satisfy the ratio of constituent elements except for nitrogen in a composition represented by composition formula (1) :

$$(Ca_{1-x1-x2}Sr_{x1}Eu_{x2})_aAl_bSi_cN_{2a/3+b+4/3c} \qquad (1)$$

(wherein 0.49<x1<1.0, 0.0<x2<0.02, 0.9≤a≤1.1, 0.9≤b≤1.1, and 0.9≤c≤1.1), and firing the mixture, wherein the nitride phosphor emits fluorescence having a peak wavelength of 630 to 646 nm when excited by light at a wavelength of 450 nm and on this occasion, exhibits an external quantum efficiency of 40% or more.

11. The nitride phosphor according to claim 10, wherein x1, x2, a, b and c are 0.69<x1<1.00, 0.00<x2<0.01, a=1, b=1 and c=1, and
wherein the nitride phosphor emits fluorescence having a peak wavelength of 630 to 640 nm when excited by light at a wavelength of 450 nm and on this occasion, exhibits an external quantum efficiency of 45% or more.

12. The nitride phosphor according to claim 10 or 11, which is represented by composition formula (1'):

$$(Ca_{1-x1'-x2'}Sr_{x1'}Eu_{x2'})_{a'}Al_{b'}Si_{c'}N_{2a'/3+b'+4/3c'} \qquad (1')$$

(wherein $0.49 < x1' < 1.0$, $0.0 < x2' < 0.02$, $0.9 \leq a \leq 1.1$, $0.9 \leq b' \leq 1.1$, and $0.9 \leq c' \leq 1.1$).

**INTERNATIONAL SEARCH REPORT**

| International application No. |
| --- |
| PCT/JP2014/056043 |

A. CLASSIFICATION OF SUBJECT MATTER
*C09K11/64*(2006.01)i, *C04B35/584*(2006.01)i, *C04B35/626*(2006.01)i, *C09K11/08*(2006.01)i

According to International Patent Classification (IPC) or to both national classification and IPC

B. FIELDS SEARCHED

Minimum documentation searched (classification system followed by classification symbols)
C09K11/64, C04B35/584, C04B35/626, C09K11/08

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho    1971–2014    Toroku Jitsuyo Shinan Koho    1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-171512 A  (Ube Industries, Ltd.), 29 June 1999 (29.06.1999), entire text (Family: none) | 1-12 |
| A | JP 2006-306982 A  (Nichia Chemical Industries, Ltd.), 09 November 2006 (09.11.2006), entire text & WO 2006/117984 A1 | 1-12 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 March, 2014 (31.03.14) | 08 April, 2014 (08.04.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/056043 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-265506 A  (Denki Kagaku Kogyo Kabushiki Kaisha), 05 October 2006 (05.10.2006), entire text & US 2009/0021141 A1     & EP 1854864 A1 & WO 2006/093135 A1      & KR 10-2007-0106507 A & CN 101128564 A         & CN 101712868 A & CN 101712869 A         & CN 101712870 A & CN 101982891 A         & CN 102585810 A | 1-12 |
| P,X P,A | WO 2013/146713 A1  (Ube Industries, Ltd.), 03 October 2013 (03.10.2013), entire text (Family: none) | 9 1-8,10-12 |
| P,A | WO 2013/147066 A1  (Ube Industries, Ltd.), 03 October 2013 (03.10.2013), entire text (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003321675 A
- JP 2006306982 A
- JP 2005307012 A
- JP 2005255885 A
- JP 2005336253 A
- JP 2006008721 A
- JP 9156912 A
- JP 4209706 A